# EUROPEAN PATENT APPLICATION

(11) **EP 1 429 248 A2**
(43) Date of publication of application: **16.06.2004**
(21) Application number: 03257527.6
(22) Date of filing: 28.11.2003
(51) Int. Cl.: G06F 9/50

(54) **Printer and network device management system for location-aware load balancing and for maintenance support, using a central management terminal**

(30) Priority: 12.12.2002 JP 2002360986; 31.10.2003 JP 2003372334
(71) Applicant: SEIKO EPSON CORPORATION, Tokyo 160-0811 (JP)
(72) Inventor: Fukao, Akihito c/o Seiko Epson Corporation, Suwa-shi, Nagano-ken 392-8502 (JP)
(74) Representative: Sturt, Clifford Mark

(57) **Abstract**

A device management system is provided that allows the life of network devices on the whole to be increased and provides improved usability to users.

A plurality of network printers 200 are communicably connected to a printer management server 100. Each network printer 200 detects its toner level and sends status information including the toner level to theprintermanagement server 100. The printer management server 100 receives the status information, generates interchange suggestion information based on the status information that suggest that a network printer 200 having a higher toner level and a network printer 200 having a lower toner level should be interchanged, and presents the interchange suggestion information to a user in response to a request.

## Description

### BACKGROUND OF THE INVENTION

### Field of the Invention

The present invention relates to a system, a terminal, a program, and method for managing a network printer and, in particular, to a device management system, aprintermanagement system, a printer management terminal and a program for terminal, and a device management method that allow the long life of network devices on the whole and provide improved usability to users.

### Description of the Related Art

Technologies for managing network printers have been disclosed, such as a printer technology disclosed in patent document 1 (hereinafter referred to as a first prior art), an information output device technology disclosed in patent document 2 (hereinafter referred to as a second prior art), and a print system disclosed in patent document 3 (hereinafter referred to as a third prior art).

According to the first prior art, a network printer that can be shared among multiple users with different IDs over a network receives print data together with the ID of a user sending the print data, determines the size of paper requested by the print data, prints out the print data on paper of the determined size, and counts the number of printed sheets of that size for that ID and stores the count in a readable manner. This allows the actual amount of usage of network printer consumables by each user to be known.

According to the second prior art, an access controller of an information output device controls access from a number of computers on a network through a communication controller. A printed-sheet counter counts print requests from each individual computer having access to the information output device and also counts print requests from each individual division to which the computer belongs. The count and the internal state of a network printer are sent to a maintenance computer according to maintenance software.

According to the third prior art, a print system is made up of first to fourth network printers, first to Nth personal computers, and a monitoring computer, which are coupled onto a LAN cable. The monitoring computer monitors the number of sheets printed and the speed at which they were printed on eachnetworkprinterandcalculatesconsumptionofeachnetwork printer. The monitoring computer selects a network printer less consumed for printing, unless urgent printing is required. This can prevent an overload on network printers and thus achieve a longer life of the network printers.

### (Patent document 1)

Japanese Patent Laid-Open No. 6-250802

### (Patent document 2)

Japanese Patent Laid-Open No. 7-73128

### (Patent document 3)

Japanese Patent Laid-Open No. 11-203092

However, the first prior art only manages usage of consumables on a user-by-user basis. Therefore, it is difficult to prevent a load from converging on particular network printers to achieve a long life of the entire network printer according to the first prior art.

The second prior art only manages the number of printed sheet on a user-by-user basis and division-by-division basis. Therefore, as with the first prior art, it is difficult to prevent a load from converging on particular network printers to achieve a long life of the entire network printer according to the second prior art.

According to the third prior art, a network printer less consumed is selected for printing. If the network printer less consumed is located in a place far distant from a user, it requires a lot of time and labor for the user to go to the printer location for taking printed sheets. Furthermore, if multiple network computers are connected to a network, a user cannot readily know which network printer printed particular data. Therefore the prior-art network printers do not provide good usability for users.

This is not limited to network printers. Similar problems may be associated with network devices of other types.

The present invention has beenmade to solve these problems with the prior art. An object of the present invention is to provide a device management system, a printer management system, a printer management terminal and a program for the printer management terminal, and a device management method that allow the long life of network devices on the whole to be increased and provide improved usability to users.

### SUMMARY OF THE INVENTION

### (Invention 1)

To achieve the object, invention 1 provides a device management system communicably connecting a plurality of network devices and managing the network devices, comprising:
utilization degree obtaining section for obtaining an utilization degree of each of the network devices, the utilization degree indicating a degree of utilization of the consumable consumed by operation of the network device; and interchange suggestion information generating section for generating, based on the utilization degree obtained by the utilization degree obtaining section, interchange suggestion information for suggesting interchange of the network devices;
wherein the interchange suggestion information generating section generates, based on the utilization degree obtained by the utilization degree obtaining section, the interchange suggestion information suggesting that a network device having a higher utilization degree among the network devices and a network device having a lower utilization degree among the network devices should be interchanged.

With this configuration, the utilization degree obtaining section obtains the utilization degree of a consumable in each network device and the interchange suggestion information generating section generates interchange suggestion information based on the obtained utilization degree. The interchange suggestion information suggests that a highly used network device and an underused network device should be interchanged.

A user or administrator of a network device can refer to generated interchange suggestion information and interchange relevant network devices according to the suggestion. After network devices in a location are used in the same environment for some time, the total numbers of sheets printed on them converge to a similar level, with little variations. For example, the total number of sheets printed on each network printer in a section in a company that handles a large number of documents may be greater, whereas the total number of sheets printed on each network printer in a section that handles a smaller number of documents may be smaller. Therefore, uniformity of the total numbers of sheets printed on the network printers may be maintained by interchanging network devices on a regular basis.

Interchanging network devices on a regular basis in this way can keep the utilization degree of the network devices uniform. Consequently, the possibility of convergence of loads on particular network devices can be reduced and the life of the network devices on the whole can be increased. Moreover, when a user wants to use a network device, a network device that is not desired by the user is not selected. Therefore, the possibility of increase in time and labor required of a user to use a network device can be reduced as compared with the prior art and higher usability can be provided to the user.

Interchange of network devices may be accomplished by changing the actual installation location of the devices or the virtual installation locations of the devices on the network. In the latter case, if section A in a company that handles a larger number of documents adjoin section B that handles a smaller number of documents and a network printer for section A and a network printer for section B are located near the boundary between them, it is not necessary to change their actual locations. Effects similar to the actual relocation can be provided by changing the virtual locations on the network. If the virtual locations on the network are changed, a print request from a personal computer at section A is printed on the network printer that was originally installed as a network printer for section B and a print request from a personal computer at section B is printed on the network printer that was originally installed as a network printer for section A. The same applies to a device management system set forth in inventions 2, 8, and 9, a device management program set forth in inventions 31, 32, 38, and 39, and a device management method set forth in inventions 53, 54, 60, and 61.

A utilization degree is a degree to which a consumable is consumed by operation of a network device. It may be the utilization quantity, rate, frequency, or other degree of usage of a consumable. The utilization quantity includes a remaining quantity as well as consumed quantity of a consumable. The same applies to the device management system set forth in invention 2, the device management program set forth in inventions 31 and 32, and the device management method set forth in inventions 53 and 54.

The utilization degree obtaining section may have any configuration that can obtain the utilization degree of each network device. For example, the utilization degree obtaining section may calculate, detect, or estimate utilization degree or may obtain utilization degree from network devices or other terminals. The same applies to the device management system set forth in invention 2 and the device management program set forth in inventions 31 and 32.

The present system may be configured as a network system consisting of only a number of network devices or as a network system on which a number of network devices and other device, terminal, or other pieces of equipment are communicably connected. In the former case, components described above may belong to any of the plurality of network devices. In the latter case, components may belong to any of the plurality of network devices, provided that they are communicably connected with each other. The same applies to a device management system set forth in inventions 2, 8, and 9.

### (Invention 2)

Further, invention 2 provides a device management system communicably connecting a plurality of network devices and managing the network devices, comprising:
utilization degree obtaining section for obtaining an utilization degree of each of the network devices, the utilization degree indicating a degree of utilization of the consumable consumed by operation of the network device; and interchange suggestion information generating section for generating, based on the utilization degree obtained by the utilization degree obtaining section, interchange suggestion information for suggesting interchange of the network devices;
wherein the interchange suggestion information generating section generates, based on the utilization degree obtained by the utilization degree obtaining section, the interchange suggestion information suggesting that a network device having a utilization degree higher than a first reference value among the network devices and a network device having a utilization degree lower than a second reference value among the network devices should be interchanged.

With this configuration, the utilization degree obtaining section obtains the utilization degree of a consumable in each network device and the interchange suggestion information generating section generates interchange suggestion information based on the obtained utilization degree. The interchange suggestion information suggests that a network device having a utilization degree higher than a first reference value among the network devices and a network device having a utilization degree lower than a second reference value among the network devices should be interchanged.

A user or administrator of a network device can refer to generated interchange suggestion information and interchange relevant network devices according to the suggestion. After network devices in a location are used in the same environment for some time, the total numbers of sheets printed on them converge to a similar level, with little variations. For example, the total number of sheets printed on each network printer in a section in a company that handles a large number of documents may be greater, whereas the total number of sheets printed on each network printer in a section that handles a smaller number of documents may be smaller. Therefore, uniformity of the total numbers of sheets printed on the network printers may be maintained by interchanging network devices on a regular basis.

Interchanging network devices on a regular basis in this way can keep the utilization degree of the network devices uniform. Consequently, the possibility of convergence of loads on particular network devices can be reduced and the life of the network devices on the whole can be increased. Moreover, when a user wants to use a network device, a network device that is not desired by the user is not selected. Therefore, the possibility of increase in time and labor required of a user to use a network device can be reduced as compared with the prior art and higher usability can be provided to the user.

### (Invention 3)

Invention 3 provides the device management system according to invention 1 or 2, wherein:
the interchange suggestion information generating section calculates the average value and the standard deviation of the utilization degree of the plurality of network devices based on the utilization degree obtained by the utilization degree obtaining section and generates interchange suggestion information suggesting that a network device having a utilization degree higher than a first threshold and a network device having a utilization degree lower than a second threshold should be interchanged, the first threshold being a value obtained by adding the average value and the standard deviation and the second threshold being a value obtained by subtracting the standard deviation from the average value.

With this configuration, the interchange suggestion information generating section calculates the average value and standard deviation of the obtained utilization degree of a plurality of network devices and generates interchange suggestion information suggesting that a network device having a utilization degree higher than the first threshold and a network device having utilization degree lower than the second threshold should be interchanged.

This suggestion encourages interchange of network devices having a particularly high utilization degree and network devices having a particularly low utilization degree, but not interchange of network devices having average utilization degree. Thus, advantageously, uniformity of utilization degree can be efficiently maintained and time and labor required for interchanging network devices can be reduced.

### (Invention 4)

Invention 4 provides the device management system according to invention 3, wherein:
the interchange suggestion information generating section generates interchange suggestion information suggesting that a network device having the nth highest utilization degree counting from the highest among the network devices having utilization degree higher than the first threshold and a network device having the nth lowest utilization degree counting from the lowest among the network devices having utilization degree lower than the second threshold should be interchanged.

With this configuration, the interchange suggestion information generating section generates interchange suggestion information suggesting that a network device having the nth highest utilization degree counting from the highest among the network devices having utilization degree higher than the first threshold should be interchanged with a network device having the nth lowest utilization degree counting from the lowest among the network devices having utilization degree lower than the second threshold.

This suggestion encourages interchange of the network device having the highest utilization degree with the network device having the lowest utilization degree. Likewise, the network device having the next highest utilization degree is interchanged with the network device having the next lowest utilization degree, and so on. Thus, advantageously, the uniformity of utilization degree can be maintained more efficiently.

### (Invention 5)

Invention 5 provides the device management system according to invention 1 or 2, wherein:
the utilization degree is a consumption of a consumable used in each of the network devices; and
the interchange suggestion information generating section calculates, based on the utilization degree obtained by the utilization degree obtaining section, the average value and the standard deviation of consumed quantities consumed in the plurality of network devices in a specified time period and generates interchange suggestion information suggesting that a network device having a consumption greater than a first threshold and a network device having a consumption less than a second threshold should be interchanged, the first threshold being the average value plus said standard deviation and the second threshold being a value obtained by subtracting the standard deviation from the average value.

With this configuration, the interchange suggestion information generating section calculates, based on the obtained utilization degree, the average value and the standard deviation of consumed quantities consumed in the plurality of network devices in a specified time period and generates interchange suggestion information suggesting that a network device having a consumption greater than the first threshold and a network device having a consumption less than the second threshold should be interchanged.

This suggestion encourages interchange of network devices having a particularly high consumption and network devices having a particularly low consumption, but not network devices having an average consumption. Thus, advantageously, the uniformity of consumptions can be effectively maintained.

### (Invention 6)

Invention 6 provides the device management system according to any of inventions 1 to 5, further comprising a installation location information storage section for storing installation location information of each of the network devices, said installation location information indicating the installation location, wherein the interchange suggestion information generating section reads the installation location information of network devices to be interchanged from said installation location information storage section and generates the interchange suggestion information based on the read installation location information.

With this configuration, the interchange suggestion information generating section reads the installation location information of network devices to be interchanged from the installation location information storage section and generates interchange suggestion information based on the read installation location information.

This helps a user identify the installation locations of the network devices to be interchanged. Therefore, the user can interchange the network devices with relative ease.

The installation location information storage section stores installation location information at any time with any mechanisms. It may be a medium in which installation location information is pre-stored or may be a medium into which installation location information is inputted from an external source during operation of the present system. The same applies to a device management system set forth in invention 13, a printer management system set forth in invention 21, and a printer management terminal set forth in invention 29.

### (Invention 7)

Invention 7 provides the device management system according to invention 6, wherein the installation location information is map information including at least the installation locations of the network devices.

With this configuration, the interchange suggestion information generating section generates interchange suggestion information based on map information including at least the installation locations of the network devices.

This allows a user to more readily identify the installation locations of network devices to be interchanged and therefore further facilitates interchange of network devices.

### (Invention 8)

Invention 8 provides a device management system communicably connecting a plurality of network devices and managing the network devices, comprising:
operating degree obtaining section for obtaining an operating degree of each of the network devices, the operating degree indicating a degree of operation of the network device; and
interchange suggestion information generating section for generating interchange suggestion information for suggesting interchange of the network devices based on the operating degrees obtained by the operating degree obtaining section;
wherein the interchange suggestion information generating section generates, based on the operating degrees obtained by the operating degree obtaining section, the interchange suggestion information suggesting that a network device having a higher operating degree among the network devices and a network device having a lower operating degree among the network devices should be interchanged.

With this configuration, the operating degree obtaining section obtains the operating degree of each network device and the interchange suggestion information generating section generates interchange suggestion information based on the obtained operating degrees. The interchange suggestion information suggests that a network device having a higher operating degree and a network device having a lower operating degree should be interchanged.

A user or administrator of a network device cab refer to the generated interchange suggestion information and interchange network devices to be interchanged according to the suggestion. After network devices in a location are used in the same environment for some time, the operating degrees of the network devices converge to a similar level with little variations. For example, the operating degree of each network printer in a section in a company that handles a larger number of documents may be relatively high, whereas the operating degree of each network printer in a section that handles a smaller number of documents may be relatively low. Therefore, advantageously, uniformity of the operating degrees of the network devices may be maintained by interchanging network devices on a regular basis.

Interchanging network devices on a regular basis in this way can keep the utilization degree of the network devices uniform. Consequently, the possibility of convergence of loads on particular network devices can be reduced and the life of the network devices on the whole can be increased. Moreover, when a user wants to use a network device, a network device that is not desired by the user is not selected. Therefore, the possibility of increase in time and labor required of a user to use a network device can be reduced as compared with the prior art and higher usability can be provided to the user.

An operating degree herein represents a degree to which a network device has operated. It may be the amount, rate, frequency, or other indications of operating degree of a network device. The same applied to a device management system set forth in invention 9, a device management program set forth in inventions 38 and 39 band a device management method set forth in inventions 60 and 61.

The operating degree obtaining section may have any configuration that can obtain the operating degree of each device. For example, it may calculate, detect, or estimate operating degrees or may obtain operating degrees from network devices or other terminals. The same applies to the device management system set forth in invention 9 and the device management program set forth in inventions 38 and 39.

### (Invention 9)

Invention 9 provides a device management system communicably connecting a plurality of network devices and managing the network devices, comprising:
operating degree obtaining section for obtaining an operating degree of each of the network devices, the operating degree indicating a degree of operation of the network device; and
interchange suggestion information generating section for generating interchange suggestion information for suggesting interchange of the network devices based on the operating degrees obtained by the operating degree obtaining section;
wherein the interchange suggestion information generating section generates, based on the operating degrees obtained by the operating degree obtaining section, the interchange suggestion information suggesting that a network device having an operating degree higher than a first reference value among the network devices and a network device having an operating degree lower than a second reference value among the network devices should be interchanged.

With this configuration, the operating degree obtaining section obtains the operating degree of each network device and the interchange suggestion information generating section generates interchange suggestion information based on the obtained operating degrees. The interchange suggestion information suggests that a network device having an operating degree higher than a first reference value among the network devices and a network device having an operating degree lower than a second reference value among the network devices should be interchanged.

A user or administrator of a network device cab refer to the generated interchange suggestion information and interchange network devices to be interchanged according to the suggestion. After network devices in a location are used in the same environment for some time, the operating degrees of the network devices converge to a similar level with little variations. For example, the operating degree of each network printer in a section in a company that handles a larger number of documents may be relatively high, whereas the operating degree of each network printer in a section that handles a smaller number of documents maybe relatively low. Therefore, advantageously, uniformity of the operating degrees of the network devices may be maintained by interchanging network devices on a regular basis.

Interchanging network devices on a regular basis in this way can keep the utilization degree of the network devices uniform. Consequently, the possibility of convergence of loads on particular network devices can be reduced and the life of the network devices on the whole can be increased. Moreover, when a user wants to use a network device, a network device that is not desired by the user is not selected. Therefore, the possibility of increase in time and labor required of a user to use a network device can be reduced as compared with the prior art and higher usability can be provided to the user.

### (Invention 10)

Invention 10 provides the device management system according to invention 8 or 9, wherein:
the interchange suggestion information generating section calculates, based on the operating degrees obtained by said operating degree obtaining section, the average value and the standard deviation of the operating degrees of the plurality of network devices and generates interchange suggestion information suggesting that a network device having an operating degree higher than a first threshold and a network device having an operating degree lower than a second threshold should be interchanged, the first threshold being a value obtainedby adding the average value and the standard deviation and the second threshold being a value obtained by subtracting the standard deviation from the average value.

With this configuration, the interchange suggestion information generating section calculates the average value and standard deviation of the obtained operating degrees of the plurality of network devices and generates interchange suggestion information suggesting that a network device having an operating degree higher than the first threshold and a network device having an operating degree lower than the second threshold should be interchanged.

This encourages interchange of network devices having aparticularlyhighoperatingdegreeandnetworkdeviceshaving a particularly low operating degree, but not network devices having an average operating degree. Thus, advantageously, the uniformity of operating degrees can be effectively maintained and the time and labor required for interchanging network devices can be reduced.

### (Invention 11)

Invention 11 provides the device management system according to invention 10, wherein:
the interchange suggestion information generating section generates interchange suggestion information suggesting that a network device having the nth highest operating degree counting from the highest among the network devices having operating degrees higher than the first threshold and a network device having the nth lowest operating degree counting from the lowest among the network devices having operating degrees lower than the second threshold should be interchanged.

With this configuration, the interchange suggestion information generating section generates interchange suggestion information suggesting that a network device having the nth highest operating degree counting from the highest among the network devices having operating degrees higher than the first threshold and a network device having the nth lowest operating degree counting from the lowest among the network devices having operating degrees lower than the second threshold should be interchanged.

This suggestion encourages interchange of the network device having the highest operating degree with the network device having the lowest operating degree. Likewise, the network device having the next highest operating degree is interchanged with the network device having the next lowest operating degree, and so on. Thus, advantageously, the uniformity of operating degrees can be maintained more efficiently.

### (Invention 12)

Invention 12 provides the device management system according to invention 8 or 9, wherein:
the operating degree is a consumption of a consumable used in each of the network devices; and
the interchange suggestion information generating section calculates, based on the operating degrees obtained by the operating degree obtaining section, the average value and the standard deviation of consumed quantities consumed in the plurality of network devices in a specified time period and generates interchange suggestion information suggesting that a network device having a consumption greater than a first threshold and a network device having a consumption less than a second threshold should be interchanged, the first threshold being a value obtained by adding the average value and the standard deviation and the second threshold being a value obtainedbysubtractingthestandarddeviationfromtheaverage value.

With this configuration, the interchange suggestion information generating section calculates, based on the obtained operating degrees, the average value and standard deviation of the consumptions in the plurality of network devices in a specified period and generates interchange suggestion information suggesting that a network device having a consumption greater than the first threshold and a network device having a consumption smaller than the second threshold should be interchanged.

This suggestion encourages interchange of network devices having a particularly high consumption and network devices having a particularly low consumption, but not network devices having an average consumption. Thus, advantageously, the uniformity of consumptions can be effectively maintained.

### (Invention 13)

Invention 13 provides device management system according to any of inventions 8 to 12, further comprising a installation location information storage section for storing installation location information of each of the network devices, said installation location information indicating the installation location, wherein the interchange suggestion information generating section reads the installation location information of network devices to be interchanged from said installation location information storage section and generates the interchange suggestion information based on the read installation location information.

With this configuration, the interchange suggestion information generating section read the installation location information of network devices to be interchanged from the installation location information storage section and generates interchange suggestion information based on the read installation location information.

This helps a user identify the location of network devices to be interchanged. Thus, advantageously, the user can interchange the network devices with relative ease.

### (Invention 14)

Invention 14 provides the device management system according to invention 13, wherein the installation location information is map information including at least the installation locations of the network devices.

With this configuration, the interchange suggestion information generating section generates interchange suggestion information based on map information including at least the installation locations of the network devices.

This allows a user to more readily identify the installation locations of network devices to be interchanged and therefore further facilitates interchange of network devices.

### (Invention 15)

In order to achieve the object describe above, invention 15 provides a printer management system communicably connecting a plurality of network printers with a printer management terminal managing the network printer,
the network printer each comprising utilization quantity detecting section for detecting the utilization quantity of a consumable used in the network printer and utilization quantity information sending section for sending the utilization quantity information detected by the utilization quantity detecting section to the printer management terminal;
the printer management terminal comprising utilization quantity information receiving section for receiving the utilization quantity information, interchange suggestion information generating section for generating interchange suggestion information for suggesting interchange of the network printers based on the utilization quantity information received by the utilization quantity information receiving section, and interchange suggestion information presenting section for presenting the interchange suggestion information generated by the interchange suggestion information generating section;
wherein the interchange suggestion information generating section generates, based on the utilization quantity information received by the utilization quantity information receiving section, interchange suggestion information suggesting that a network printer having a higher utilization quantity and a network printer having a lower utilization quantity should be interchanged.

With this configuration, the utilization quantity detecting section in each network printer detects the utilization quantity of a consumable in the network printer and utilization quantity information sending section sends utilization quantity information indicating the detected utilization quantity to the printer management terminal.

In the printer management terminal, when the utilization quantity information receiving section receives the utilization quantity information, the interchange suggestion information generating section generates interchange suggestion information based on the received utilization quantity information, and the interchange suggestion information presenting section presents the generated interchange suggestion information. The interchange suggestion information suggests that a network printer having a higher utilization quantity and a network printer having a lower utilization quantity should be interchanged.

A user or administrator of a network printer can refer to presented interchange suggestion information and interchange relevant network printers according to the suggestion. After network printers in a location are used in the same environment for some time, the total numbers of sheets printed on them converge to a similar level, with little variations. For example, the total number of sheets printed on each network printer in a section in a company that handles a larger number of documents may be greater, whereas the total number of sheets printed on each network printer in a section that handles a smaller number of documents may be smaller. Therefore, uniformity of the total numbers of sheets printed on the network printers may be maintained by interchanging network printers on a regular basis.

Interchanging network printers on a regular basis in this way can keep the utilization quantity of the network printers uniform. Consequently, the possibility of convergence of loads on particular network printers can be reduced and the life of the network printers on the whole can be increased. Moreover, when a user wants to use a network printer, a network printer that is not desired by the user is not selected. Therefore, the possibility of increase in time and labor required of a user to use a network printer can be reduced as compared with the prior art and higher usability can be provided to the user.

Interchange of network printers may be accomplished by changing the actual installation location of the printers or the virtual installation locations of the printers on the network. In the latter case, if section A in a company that handles a large number of documents adjoin section B that handles a smaller number of documents and a network printer for section A and a network printer for section B are located near the boundary between them, it is not necessary to change their actual locations. Effects similar to the actual relocation can be provided by changing the virtual locations on the network. If the virtual locations on the network are changed, a print request from a personal computer at section A is printed on the network printer that was originally installed as a network printer for section B and a print request from a personal computer at section B is printed on the network printer that was originally installed as a network printer for section A. The same applies to a printer management system set forth in invention 16, a printer management terminal set forth in inventions 23 and 24, a program for terminal set forth in inventions 45 and 46, and a printer management method set forth in inventions 67 and 68.

A utilization quantity is the quantity of a consumable used in a network printer. It may be a remaining quantity or consumed quantity of a consumable. The same applies to the printer management system set forth in invention 16, the printer management terminal set forth in inventions 23 and 24, the program for terminal set forth in inventions 45 and 46, and the printer management method set forth in inventions 67 and 68.

The interchange suggestion information presenting sectionmayhave anyconfiguration that canpresent interchange suggestion information. For example, it may send interchange suggestion information to a network printer or other terminal in response to a request from the printer or terminal or may present interchange suggestion information simply by displaying or printing the information. The same applies to the printer management system set forth in invention 16, the printer management terminal set forth in inventions 23 and 24, and the program for terminal set forth in inventions 45 and 46.

The printer management terminal may be implemented as a single terminal or a network system in which a plurality of terminals are communicably connected. In the latter case, components described above may belong to any of the plurality of terminals, provided that they are communicably connected with each other. For example, if a printer management terminal is formed by communicably connecting two terminals with each other, utilization quantity information receiving section and interchange suggestion information generating section may be provided in the first printer management terminal and interchange suggestion informationmaybe provided in the other printer management terminal. The same applies to the printer management system set forth in invention 16, the printer management terminal set forth in inventions 23 and 24, the program for terminal set forth in inventions 45 and 46, and the printer management method set forth in inventions 67 and 68.

The printer management terminal may be any communication facility that is connected to one end of a communication line connecting with network printers and capable of functioning as a server. The printer management terminal may also be configured as a terminal capable of functioning as both a client and server. The same applies to the printer management system set forth in invention 16, the printer management terminal set forth in inventions 23 and 24, the program for terminal set forth in inventions 45 and 46, and the printer management method set forth in inventions 67 and 68.

### (Invention 16)

Further, invention 16 provides a printer management system communicably connecting a plurality of network printers with a printer management terminal managing the network printer,
the network printer each comprising utilization quantity detecting section for detecting the utilization quantity of a consumable used in the network printer and utilization quantity information sending section for sending the utilization quantity information detected by the utilization quantity detecting section to the printer management terminal;
the printer management terminal comprising utilization quantity information receiving section for receiving the utilization quantity information, interchange suggestion information generating section for generating interchange suggestion information for suggesting interchange of the network printers based on the utilization quantity information received by the utilization quantity information receiving section, and interchange suggestion information presenting section for presenting the interchange suggestion information generated by the interchange suggestion information generating section;
wherein the interchange suggestion information generating section generates, based on the utilization quantity information received by the utilization quantity information receiving section, interchange suggestion information suggesting that a network printer having a utilization quantity higher than a first reference value among the network printers and a network printer having a utilization quantity lower than a second reference value among the network printers should be interchanged.

With this configuration, the utilization quantity detecting section in each network printer detects the utilization quantity of a consumable in the network printer and utilization quantity information sending section sends utilization quantity information indicating the detected utilization quantity to the printer management terminal.

In the printer management terminal, when the utilization quantity information receiving section receives the utilization quantity information, the interchange suggestion information generating section generates interchange suggestion information based on the received utilization quantity information, and the interchange suggestion information presenting section presents the generated interchange suggestion information. The interchange suggestion information suggests that a network printer having a utilization quantity higher than a first reference value among the network printers and a network printer having a utilization quantity lower than a second reference value among the network printers should be interchanged.

A user or administrator of a network printer can refer to presented interchange suggestion information and interchange relevant network printers according to the suggestion. After network printers in a location are used in the same environment for some time, the total numbers of sheets printed on them converge to a similar level, with little variations. For example, the total number of sheets printed on each network printer in a section in a company that handles a larger number of documents may be greater, whereas the total number of sheets printed on each network printer in a section that handles a smaller number of documents may be smaller. Therefore, uniformity of the total numbers of sheets printed on the network printers may be maintained by interchanging network printers on a regular basis.

Interchanging network printers on a regular basis in this way can keep the utilization quantity of the network printers uniform. Consequently, the possibility of convergence of loads on particular network printers can be reduced and the life of the network printers on the whole can be increased. Moreover, when a user wants to use a network printer, a network printer that is not desired by the user is not selected. Therefore, the possibility of increase in time and labor required of a user to use a network printer can be reduced as compared with the prior art and higher usability can be provided to the user.

### (Invention 17)

Invention 17 provides the printer management system according to invention 15 or 16, wherein:
the interchange suggestion information generating section calculates the average value and the standard deviation of the utilization quantity of the plurality of network printers based on the utilization quantity information received by the utilization quantity information receiving section and generates interchange suggestion information suggesting that a networkprinter having a utilization quantity higher than a first threshold and a network printer having a utilization quantity lower than a second threshold should be interchanged, the first threshold being a value obtained by adding the average value and the standard deviation and the second threshold being a value obtained by subtracting the standard deviation from the average value.

With this configuration, the interchange suggestion information generating section in the printer management terminal calculate the average value and standard deviation of the utilization quantity of the plurality of network printers based on utilization quantity information received and generates interchange suggestion information suggesting that a network printer having a utilization quantity higher than the first threshold and a network printer having a utilization quantity lower than the second threshold should be interchanged.

This suggestion encourages interchange of network printers having a particularly high network printers and network printers having a particularly low utilization quantity, but not network printers having an average utilization quantity. Thus, advantageously, the uniformity of utilization quantity canbe effectivelymaintained and time and labor required for interchanging network printers can be reduced.

### (Invention 18)

Invention 18 provides the printer management system according to invention 17, wherein:
the interchange suggestion information generating section generates interchange suggestion information suggesting that a network printer having the nth highest utilization quantity counting from the highest among the network printers having utilization quantity higher than a first threshold and a network printer having the nth lowest utilization quantity counting from the lowest among the network printers having utilization quantity lower than a second threshold should be interchanged.

With this configuration, the interchange suggestion information generating section in the printer management terminal generates interchange suggestion information suggesting that a network printer having the nth highest utilization quantity counting from the highest among the network printers having utilization quantity higher than the first threshold and a network printer having the nth lowest utilization quantity counting from the lowest among the network printers having utilization quantity lower than the second threshold should be interchanged.

This suggestion encourages interchange of the network printer having the highest utilization quantity with the network printer having the lowest utilization quantity. Likewise, the network printer having the next highest utilization quantity is interchanged with the network printer having the next lowest utilization quantity, and so on. Thus, advantageously, the uniformity of utilization quantity can be maintained more efficiently.

### (Invention 19)

Invention 19 provides the printer management system according to invention 15 or 16, wherein:
the utilization quantity is the number of sheets used in printing on each of the network printers, and
the interchange suggestion information generating section calculates, based on the utilization quantity information received by the utilization quantity information receiving section, the average value and the standard deviation of the numbers of sheets printed on the plurality of network printers in a specified time period and generates interchange suggestion information suggesting that a network printer having the number of printed sheets that is greater than a first threshold and a network printer having the number of printed sheets that is smaller than a second threshold should be interchanged, the first threshold being a value obtained by adding the average value and the standard deviation and the second threshold being a value obtained by subtracting the standard deviation from the average value.

With this configuration, the interchange suggestion information generating section in the printer management terminal calculates, based on the received utilization quantity information, the average value and the standard deviation of the numbers of sheets printed on the plurality of network printers in the specified period and generates interchange suggestion information suggesting that a network printer having a number of printed sheets greater than the first threshold and a network printer having a number of printed sheets smaller than the second threshold should be interchanged.

This suggestion encourages interchange of network printers that have printed a particularly large number of sheets and network printers that have printed a particularly small number of sheets not network printers with an average number of sheets printed. Thus, advantageously, the uniformity of the numbers of sheets printed on the network printers can be effectively maintained.

### (Invention 20)

Invention 20 provides the printer management system according to invention 17 or 18, wherein the utilization quantity is the remaining quantity of toner or ink used in printing on each of the network printers.

With this configuration, the interchange suggestion information generating section in the printer management terminal calculates the average value and standard deviation of the levels of toner or ink used in the plurality of network printers based on received utilization quantity information and generates interchange suggestion information suggesting that a network printer having a toner or ink level higher than the first threshold and a network printer having a toner or ink level lower than the second threshold should be interchanged.

This suggestion encourages interchange of network printers having a particularly high toner or ink level and network printers having a particularly low toner or ink level, but not network printers having an average toner level. Thus, advantageously, the uniformity of the toner or ink levels of the network printers can be effectively maintained.

### (Invention 21)

Invention 21 provides the printer management system according to any of inventions 15 to 20, wherein:
the printer management terminal comprises installation location information storage section for storing installation location information of each of the network printers, said installation location information indicating the installation location; and
the interchange suggestion information generating section reads the installation location information of network printers to be interchanged from the installation location information storage section and generates the interchange suggestioninformation based on the read installation location information.

With this configuration, the interchange suggestion information generating section in the printer management terminal reads the installation location information of network printers to be interchanged from the installation location information storage section and generates interchange suggestion information based on the installation location information.

This helps a user identify the installation locations of the network printers to be interchanged. Therefore, the user can interchange the network printers with relative ease.

### (Invention 22)

Invention 22 provides the printer management system according to invention 21, wherein the installation location information is map information including at least the installation locations of the network printers.

With this configuration, the interchange suggestion information generating section in the printer management terminal generates interchange suggestion information based on map information that includes at least the installation locations of the network printers.

This allows a user to more readily identify the installation locations of network printers to be interchanged and therefore further facilitates interchange of network printers.

### (Invention 23)

In order to achieve the object described above, invention 23 provides a printer management terminal communicably connected to network printer, comprising:
utilization quantity information receiving section for receiving utilization quantity information indicating the utilization quantity of a consumable used in the network printer, interchange suggestion information generating section for generating interchange suggestion information for suggesting interchange of the network printers based on the utilization quantity information received by the utilization quantity information receiving section, and interchange suggestion information presenting section for presenting the interchange suggestion information generated by the interchange suggestion information generating section;
wherein the interchange suggestion information generating section generates, based on the utilization quantity information received by the utilization quantity information receiving section, interchange suggestion information suggesting that a network printer having a higher utilization quantity and a network printer having a lower utilization quantity should be interchanged.

This configuration provides effects equivalent to those of the printer management terminal in the printer management system set forth in invention 15. Accordingly, advantages equivalent to those of the printer management system set forth in invention 15 are provided.

### (Invention 24)

Further, invention 24 provides a printer management terminal communicably connected to network printer, comprising:
utilization quantity information receiving section for receiving utilization quantity information indicating the utilization quantity of a consumable used in the network printer, interchange suggestion information generating section for generating interchange suggestion information for suggesting interchange of the network printers based on the utilization quantity information received by the utilization quantity information receiving section, and interchange suggestion information presenting section for presenting the interchange suggestion information generated by the interchange suggestion information generating section;
wherein the interchange suggestion information generating section generates, based on the utilization quantity information received by the utilization quantity information receiving section, interchange suggestion information suggesting that a network printer having a utilization quantity higher than a first reference value among the network printers and a network printer having a utilization quantity lower than a second reference value among the network printers should be interchanged.

This configuration provides effects equivalent to those of the printer management terminal in the printer management system set forth in invention 16. Accordingly, advantages equivalent to those of the printer management system set forth in invention 16 are provided.

### (Invention 25)

Invention 25 provides the printer management terminal according to invention 23 or 24, wherein:
the interchange suggestion information generating section calculates the average value and the standard deviation of the utilization quantity of the plurality of network printers based on the utilization quantity information received by said utilization quantity information receiving section and generates interchange suggestion information suggesting that a network printer having a utilization quantity higher than a first threshold and a network printer having a utilization quantity lower than a second threshold should be interchanged, the first threshold being a value obtained by adding the average value and the standard deviation and the second threshold being a value obtained by subtracting the standard deviation from the average value.

This configuration provides effects equivalent to those of the printer management terminal in the printer management system set forth in invention 17. Accordingly, advantages equivalent to those of the printer management system set forth in invention 17 are provided.

### (Invention 26)

Invention 26 provides the printer management terminal according to invention 25, wherein:
the interchange suggestion information generating section generates interchange suggestion information suggesting that a network printer having the nth highest utilization quantity counting from the highest among the network printers having utilization quantity higher than the first threshold and a network printer having the nth lowest utilization quantity counting from the lowest among the network printers having utilization quantity lower than the second threshold should be interchanged.

This configuration provides effects equivalent to those of the printer management terminal in the printer management system set forth in invention 18. Accordingly, advantages equivalent to those of the printer management system set forth in invention 18 are provided.

### (Invention 27)

Invention 27 provides the printer management terminal according to invention 23 or 24, wherein:
the utilization quantity is the number of sheets used in printing on each of the network printers, and
the interchange suggestion information generating section calculates, based on the utilization quantity information received by the utilization quantity information receiving section, the average value and the standard deviation of the numbers of sheets printed on the plurality of network printers in a specified time period and generates interchange suggestion information suggesting that a network printer having the number of printed sheets that is greater than a first threshold and a network printer having the number of printed sheets that is smaller than a second threshold should be interchanged, the first threshold being a value obtained by adding the average value and the standard deviation and the second threshold being a value obtained by subtracting the standard deviation from the average value.

This configuration provides effects equivalent to those of the printer management terminal in the printer management system set forth in invention 19. Accordingly, advantages equivalent to those of the printer management system set forth in invention 19 are provided.

### (Invention 28)

Invention 28 provides the printer management terminal according to invention 25 or 26, wherein the utilization quantity is the remaining quantity of toner or ink used in printing on each of the network printers.

This configuration provides effects equivalent to those of the printer management terminal in the printer management system set forth in invention 20. Accordingly, advantages equivalent to those of the printer management system set forth in invention 20 are provided.

### (Invention 29)

Invention 29 provides the printer management terminal according to any of inventions 23 to 28, wherein:
the printer management terminal comprises installation location information storage section for storing installation location information of each of the network printers, said installation location information indicating the installation location; and
the interchange suggestion information generating section reads the installation location information of network printers to be interchanged from the installation location information storage section and generates the interchange suggestion information based on the read installation location information.

This configuration provides effects equivalent to those of the printer management terminal in the printer management system set forth in invention 21. Accordingly, advantages equivalent to those of the printer management system set forth in invention 21 are provided.

### (Invention 30)

Invention 30 provides the printer management terminal according to invention 29, wherein the installation location information is map information including at least the installation locations of the network printers.

This configuration provides effects equivalent to those of the printer management terminal in the printer management system set forth in invention 22. Accordingly, advantages equivalent to those of the printer management system set forth in invention 22 are provided.

### (Invention 31)

In order to achieve the obj ect described above, invention 31 provides a device management program to be executed by a computer communicably connecting a plurality of network devices, said program causing said computer to perform a process implemented as:
utilization degree obtaining section for obtaining an utilization degree of each of said network devices, said utilization degree indicating a degree of utilization of the consumable consumed by operation of said network device; and
interchange suggestion information generating section for generating, based on the utilization degree obtained by said utilization degree obtaining section, interchange suggestion information for suggesting interchange of said network devices;
wherein said interchange suggestion information generating section generates, based on the utilization degree obtained by said utilization degree obtaining section, the interchange suggestion information suggesting that a network device having a higher utilization degree among said network devices and a network device having a lower utilization degree among said network devices should be interchanged.

With this configuration, the computer reads the program and performs the process according to the program, thereby providing effects and advantages equivalent to those of the device management system set forth in invention 1.

### (Invention 32)

Further, invention 32 provides a device management program to be executed by a computer communicably connecting a plurality of network devices, said program causing said computer to perform a process implemented as:
utilization degree obtaining section for obtaining an utilization degree of each of said network devices, said utilization degree indicating a degree of utilization of the consumable consumed by operation of said network device; and
interchange suggestion information generating section for generating, based on the utilization degree obtained by said utilization degree obtaining section, interchange suggestion information for suggesting interchange of said network devices;
wherein said interchange suggestion information generating section generates, based on the utilization degree obtained by said utilization degree obtaining section, the interchange suggestion information suggesting that a network device having a utilization degree higher than a first reference value among said network devices and a network device having a utilization degree lower than a second reference value among said network devices should be interchanged.

With this configuration, the computer reads the program and performs the process according to the program, thereby providing effects and advantages equivalent to those of the device management system set forth in invention 2.

### (Invention 33)

Invention 33 provides the device management program according to invention 31 or 32, wherein:
the interchange suggestion information generating section calculates the average value and the standard deviation of the utilization degree of the plurality of network devices based on the utilization degree obtained by the utilization degree obtaining section and generates interchange suggestion information suggesting that a network device having a utilization degree higher than a first threshold and a network device having a utilization degree lower than a second threshold should be interchanged, the first threshold being a value obtained by adding the average value and the standard deviation and the second threshold being a value obtained by subtracting the standard deviation from the average value.

With this configuration, the computer reads the program and performs the process according to the program, thereby providing effects and advantages equivalent to those of the device management system set forth in invention 3.

### (Invention 34)

Invention 34 provides the device management program according to invention 33, wherein:
the interchange suggestion information generating section generates interchange suggestion information suggesting that a network device having the nth highest utilization degree counting from the highest among the network devices having utilization degree higher than the first threshold and a network device having the nth lowest utilization degree counting from the lowest among the network devices having utilization degree lower than the second threshold should be interchanged.

With this configuration, the computer reads the program and performs the process according to the program, thereby providing effects and advantages equivalent to those of the device management system set forth in invention 4.

### (Invention 35)

Invention 35 provides the device management program according to invention 31 or 32, wherein:
the utilization degree is a consumption of a consumable used in each of the network devices; and
the interchange suggestion information generating section calculates, based on the utilization degree obtained by the utilization degree obtaining section, the average value and the standard deviation of consumed quantities consumed in the plurality of network devices in a specified time period and generates interchange suggestion information suggesting that a network device having a consumption greater than a first threshold and a network device having a consumption less than a second threshold shouldbe interchanged, the first threshold being the average value plus said standard deviation and the second threshold being a value obtained by subtracting the standard deviation from the average value.

With this configuration, the computer reads the program and performs the process according to the program, thereby providing effects and advantages equivalent to those of the device management system set forth in invention 5.

### (Invention 36)

Invention 36 provides the device management program according to any of inventions 31 to 35, wherein said interchange suggestion information generating section reads the installation location information of network devices to be interchanged from installation location information storage section storing installation location information of each of said network devices, said installation location information indicating the installation location and generates said interchange suggestion information based on said read installation location information.

With this configuration, the computer reads the program and performs the process according to the program, thereby providing effects and advantages equivalent to those of the device management system set forth in invention 6.

### (Invention 37)

Invention 37 provides the device management program according to invention 36, wherein the installation location information is map information including at least the installation locations of the network devices.

With this configuration, the computer reads the program and performs the process according to the program, thereby providing effects and advantages equivalent to those of the device management system set forth in invention 7.

### (Invention 38)

Invention 38 provides a device management program to be executed by a computer communicably connecting a plurality of network devices, said program causing said computer to perform a process implemented as:
operating degree obtaining section for obtaining an operating degree of each of the network devices, the operating degree indicating a degree of operation of the network device; and
interchange suggestion information generating section for generating interchange suggestion information for suggesting interchange of the network devices based on the operating degrees obtained by the operating degree obtaining section;
wherein the interchange suggestion information generating section generates, based on the operating degrees obtained by the operating degree obtaining section, the interchange suggestion information suggesting that a network device having a higher operating degree among the network devices and a network device having a lower operating degree among the network devices should be interchanged.

With this configuration, the computer reads the program and performs the process according to the program, thereby providing effects and advantages equivalent to those of the device management system set forth in invention 8.

### (Invention 39)

Invention 39 provides a device management program to be executed by a computer communicably connecting a plurality of network devices, said program causing said computer to perform a process implemented as:
operating degree obtaining section for obtaining an operating degree of each of the network devices, the operating degree indicating a degree of operation of the network device; and
interchange suggestion information generating section for generating interchange suggestion information for suggesting interchange of the network devices based on the operating degrees obtained by the operating degree obtaining section;
wherein the interchange suggestion information generating section generates, based on the operating degrees obtained by the operating degree obtaining section, the interchange suggestion information suggesting that a network device having an operating degree higher than a first reference value among the network devices and a network device having an operating degree lower than a second reference value among the network devices should be interchanged.

With this configuration, the computer reads the program and performs the process according to the program, thereby providing effects and advantages equivalent to those of the device management system set forth in invention 9.

### (Invention 40)

Invention 40 provides the device management program according to invention 38 or 39, wherein the interchange suggestion information generating section calculates, based on the operating levels obtained by said operating level obtaining section, the average value and the standard deviation of the operating degrees of the plurality of network devices and generates interchange suggestion information suggesting that a network device having an operating degree higher than a first threshold and a network device having an operating degree lower than a second threshold should be interchanged, the first thresholdbeing a value obtainedby adding the average value and the standard deviation and the second threshold being a value obtained by subtracting the standard deviation from the average value.

With this configuration, the computer reads the program and performs the process according to the program, thereby providing effects and advantages equivalent to those of the device management system set forth in invention 10.

### (Invention 41)

Invention 41 provides the device management program according to invention 40, wherein:
the interchange suggestion information generating section generates interchange suggestion information suggesting that a network device having the nth highest operating degree counting from the highest among the network devices having operating degrees higher than the first threshold and a network device having the nth lowest operating degree counting from the lowest among the network devices having operating degrees lower than the second threshold should be interchanged.

With this configuration, the computer reads the program and performs the process according to the program, thereby providing effects and advantages equivalent to those of the device management system set forth in invention 11.

### (Invention 42)

Invention 42 provides the device management program according to invention 38 or 39, wherein:
the operating degree is a consumption of a consumable used in each of the network devices; and
the interchange suggestion information generating section calculates, based on the operating degrees obtained by the operating degree obtaining section, the average value and the standard deviation of consumed quantities consumed in the plurality of network devices in a specified time period and generates interchange suggestion information suggesting that a network device having a consumption greater than a first threshold and a network device having a consumption less than a second threshold shouldbe interchanged, the first threshold being a value obtained by adding the average value and the standard deviation and the second threshold being a value obtainedby subtracting the standard deviation from the average value.

With this configuration, the computer reads the program and performs the process according to the program, thereby providing effects and advantages equivalent to those of the device management system set forth in invention 12.

### (Invention 43)

Invention 43 provides the device management program according to any of inventions 38 to 42, wherein:
the interchange suggestion information generating section reads the installation location information of network devices to be interchanged from installation location information storage section storing installation location information of each of said network devices, said installation location information indicating the installation location and generates the interchange suggestion information based on the read installation location information.

With this configuration, the computer reads the program and performs the process according to the program, thereby providing effects and advantages equivalent to those of the device management system set forth in invention 13.

### (Invention 44)

Invention 44 provides the device management program according to invention 43, wherein the installation location information is map information including at least the installation locations of the network devices.

With this configuration, the computer reads the program and performs the process according to the program, thereby providing effects and advantages equivalent to those of the device management system set forth in invention 14.

### (Invention 45)

In order to achieve the obj ect described above, invention 45 provides a program for terminal to be executed by a computer communicably connecting a network printer, said program causing said computer to perform a process implemented as:
utilization quantity information receiving section for receiving utilization quantity information indicating the utilization quantity of a consumable used in the network printer; interchange suggestion information generating section for generating interchange suggestion information for suggesting interchange of the network printers based on the utilization quantity information received by the utilization quantity information receiving section; and interchange suggestion information presenting section for presenting the interchange suggestion information generated by the interchange suggestion information generating section;
wherein the interchange suggestion information generating section generates, based on the utilization quantity information received by the utilization quantity information receiving section, the interchange suggestion information suggesting that a network printer having a higher utilization quantity and a network printer having a lower utilization quantity should be interchanged.

With this configuration, the computer reads the program and performs the process according to the program, thereby providing effects and advantages equivalent to those of the printer management terminal set forth in invention 23.

### (Invention 46)

Further, invention 46 provides a program for terminal to be executed by a computer communicably connecting a network printer, said program causing said computer to perform a process implemented as: utilization quantity information receiving section for receiving utilization quantity information indicating the utilization quantity of a consumable used in the networkprinter; interchange suggestion information generating section for generating interchange suggestion information for suggesting interchange of the network printersbased ontheutilization quantity information received by the utilization quantity information receiving section; and interchange suggestion information presenting section for presenting the interchange suggestion information generated by the interchange suggestion information generating section;
wherein the interchange suggestion information generating section generates, based on the utilization quantity information received by the utilization quantity information receiving section, the interchange suggestion information suggesting that a network printer having a utilization quantity higher than a first reference value among the network printers and a network printer having a utilization quantity lower than a second reference value among the network printers should be interchanged.

With this configuration, the computer reads the program and performs the process according to the program, thereby providing effects and advantages equivalent to those of the printer management terminal set forth in invention 24.

### (Invention 47)

Invention 47 provides the program for terminal according to invention 45 or 46, wherein:
the interchange suggestion information generating section calculates the average value and the standard deviation of the utilization quantity of the plurality of network printers based on the utilization quantity information received by said utilization quantity information receiving section and generates interchange suggestion information suggestingthatanetworkprinterhavingautilizationquantity higher than a first threshold and a network printer having a utilization quantity lower than a second threshold should be interchanged, the first threshold being a value obtained by adding the average value and the standard deviation and the second threshold being a value obtained by subtracting the standard deviation from the average value.

With this configuration, the computer reads the program and performs the process according to the program, thereby providing effects and advantages equivalent to those of the printer management terminal set forth in invention 25.

### (Invention 48)

Invention 48 provides the program for terminal according to invention 47, wherein: the interchange suggestion information generating section generates interchange suggestion information suggesting that a network printer having the nth highest utilization quantity counting from the highest among the network printershaving utilization quantity higher than the first threshold and a network printer having the nth lowest utilization quantity counting from the lowest among the network printers having utilization quantity lower than the second threshold should be interchanged.

With this configuration, the computer reads the program and performs the process according to the program, thereby providing effects and advantages equivalent to those of the printer management terminal set forth in invention 26.

### (Invention 49)

Invention 49 provides the program for terminal according to invention 45 or 46, wherein:
the utilization quantity is the number of sheets used in printing on each of the network printers, and
the interchange suggestion information generating section calculates, based on the utilization quantity information received by the utilization quantity information receiving section, the average value and the standard deviation of the numbers of sheets printed on the plurality of network printers in a specified time period and generates interchange suggestion information suggesting that a network printer having the number of printed sheets that is greater than a first threshold and a network printer having the number of printed sheets that is smaller than a second threshold should be interchanged, the first threshold being a value obtained by adding the average value and the standard deviation and the second threshold being a value obtained by subtracting the standard deviation from the average value.

With this configuration, the computer reads the program and performs the process according to the program, thereby providing effects and advantages equivalent to those of the printer management terminal set forth in invention 27.

### (Invention 50)

Invention 50 provides the program for terminal according to invention 47 or 48, wherein the utilization quantity is the remaining quantity of toner or ink used in printing on each of the network printers.

With this configuration, the computer reads the program and performs the process according to the program, thereby providing effects and advantages equivalent to those of the printer management terminal set forth in invention 28.

### (Invention 51)

Invention 51 provides the program for terminal according to any of inventions 45 to 50, wherein: the interchange suggestion information generating section reads the installation location information of network printers to be interchanged from the installation location information storage section storing installation location information of each of said network printers, said installation location information indicating the installation location and generates the interchange suggestion information based on the read installation location information.

With this configuration, the computer reads the program and performs the process according to the program, thereby providing effects and advantages equivalent to those of the printer management terminal set forth in invention 29.

### (Invention 52)

Invention 52 provides the program for terminal according to invention 51, wherein the installation location information is map information including at least the installation locations of the network printers.

With this configuration, the computer reads the program and performs the process according to the program, thereby providing effects and advantages equivalent to those of the printer management terminal set forth in invention 30.

### (Invention 53)

In order to achieve the obj ect described above, invention 53 provides a device management method for communicably connecting a plurality of network devices and managing the network devices, comprising the steps of:
obtaining an utilization degree of each of said network devices, said utilization degree indicating a degree of utilization of the consumable consumed by operation of said network device; and
generating, based on the utilization degree obtained at the utilization degree obtaining step, interchange suggestion information for suggesting interchange of the network devices;
wherein the interchange suggestion information generating step generates, based on the utilization degree obtained at the utilization degree obtaining step, the interchange suggestion information suggesting that a network device having a higher utilization degree among the network devices and a network device having a lower utilization degree among the network devices should be interchanged.

This method provides advantages equivalent to those of the device management system set forth in invention 1.

The utilization degree obtaining step may be performed in any manner in which the utilization degree of each network device can be obtained. For example, the utilization degree may be calculated, detected, or estimated or obtained from network devices or other terminals. The same applies to the device management method set forth in invention 54.

### (Invention 54)

Further, invention 54 provides a device management method for communicably connecting a plurality of network devices and managing the network devices, comprising the steps of:
obtaining an utilization degree of each of said network devices, said utilization degree indicating a degree of utilization of the consumable consumed by operation of said network device; and
generating, based on the utilization degree obtained at the utilization degree obtaining step, interchange suggestion information for suggesting interchange of the network devices;
wherein the interchange suggestion information generating step generates, based on the utilization degree obtained at the utilization degree obtaining step, the interchange suggestion information suggesting that a network device having a utilization degree higher than a first reference value among the network devices and a network device having a utilization degree lower than a second reference value among the network devices should be interchanged.

This method provides advantages equivalent to those of the device management system set forth in invention 2.

### (Invention 55)

Invention 55 provides the device management method according to invention 53 or 54, wherein:
the interchange suggestion information generating step calculates the average value and the standard deviation of the utilization degree of the plurality of network devices based on the utilization degree obtained at the utilization degree obtaining step and generates interchange suggestion information suggesting that a network device having a utilization degree higher than a first threshold and a network device having a utilization degree lower than a second threshold should be interchanged, the first threshold being a value obtained by adding the average value and the standard deviation and the second threshold being a value obtained by subtracting the standard deviation from the average value.

This method provides advantages equivalent to those of the device management system set forth in invention 3.

### (Invention 56)

Invention 56 provides the device management method according to invention 55, wherein:
the interchange suggestion information generating step generates interchange suggestion information suggesting that a network device having the nth highest utilization degree counting from the highest among the network devices having utilization degree higher than the first threshold and a network device having the nth lowest utilization degree counting from the lowest among the network devices having utilization degree lower than the second threshold should be interchanged.

This method provides advantages equivalent to those of the device management system set forth in invention 4.

### (Invention 57)

Invention 57 provides the device management method according to invention 53 or 54, wherein:
the utilization degree is a consumption of a consumable used in each of the network devices; and
the interchange suggestion information generating step calculates, based on the utilization degree obtained at the utilization degree obtaining step, the average value and the standard deviation of consumed quantities consumed in the plurality of network devices in a specified time period and generates interchange suggestion information suggesting that a network device having a consumption greater than a first threshold and a network device having a consumption less than a second threshold shouldbe interchanged, the first threshold being the average value plus said standard deviation and the second threshold being a value obtained by subtracting the standard deviation from the average value.

This method provides advantages equivalent to those of the device management system set forth in invention 5.

### (Invention 58)

Invention 58 provides the device management method according to any of inventions 53 to 57, wherein the interchange suggestion information generating step reads installation location information of network devices to be interchanged from installation location information storage section storing installation location information of each of said network device, said installation location information indicating the installation location and generates the interchange suggestion information based on the read installation location information.

This method provides advantages equivalent to those of the device management system set forth in invention 6.

### (Invention 59)

Invention 59 provides the device management method according to invention 58, wherein the installation location information is map information including at least the installation locations of the network devices.

This method provides advantages equivalent to those of the device management system set forth in invention 7.

### (Invention 60)

Invention 60 provides a device management method for communicably connecting a plurality of network devices and managing the network devices, comprising the steps of:
obtaining an operating degree of each of the network devices, the operating degree indicating a degree of operation of the network device; and
generating interchange suggestion information for suggesting interchange of the network devices based on the operating degrees obtained at the operating degree obtaining step;
wherein the interchange suggestion information generating step generates, based on the operating degrees obtained at the operating degree obtaining step the interchange suggestion information suggesting that a network device having a higher operating degree among the network devices and a network device having a lower operating degree among the network devices should be interchanged.

This method provides advantages equivalent to those of the device management system set forth in invention 8.

The operating degree obtaining step may be performed in any manner in which the operating degree of each network device can be obtained. For example, the operating degree may be calculated, detected, or estimated or obtained from network devices or other terminals. The same applies to the device management method set forth in invention 61.

### (Invention 61)

Invention 61 provides a device management method for communicably connecting a plurality of network devices and managing the network devices, comprising the steps of:
obtaining an operating degree of each of the network devices, the operating degree indicating a degree of operation of the network device; and
generating interchange suggestion information for suggesting interchange of the network devices based on the operating degrees obtained at the operating degree obtaining step;
wherein the interchange suggestion information generating step generates, based on the operating degrees obtained at the operating degree obtaining step the interchange suggestion information suggesting that a network device having an operating degree higher than a first reference value among the network devices and a network device having an operating degree lower than a second reference value among the network devices should be interchanged.

This method provides advantages equivalent to those of the device management system set forth in invention 9.

### (Invention 62)

Invention 62 provides the device management method according to invention 60 or 61, wherein:
the interchange suggestion information generating step calculates, based on the operating degrees obtained at the operating degree obtaining step, the average value and the standard deviation of the operating degrees of the plurality of network devices and generates interchange suggestion information suggesting that a network device having an operating degree higher than a first threshold and a network device having an operating degree lower than a second threshold should be interchanged, the first threshold being a value obtained by adding the average value and the standard deviation and the second threshold being a value obtained by subtracting the standard deviation from the average value.

This method provides advantages equivalent to those of the device management system set forth in invention 10.

### (Invention 63)

Invention 63 provides the device management method according to invention 62, wherein:
the interchange suggestion information generating step generates interchange suggestion information suggesting that a network device having the nth highest operating degree counting from the highest among the network devices having operating degrees higher than the first threshold and a network device having the nth lowest operating degree counting from the lowest among the network devices having operating degrees lower than the second threshold should be interchanged.

This method provides advantages equivalent to those of the device management system set forth in invention 11.

### (Invention 64)

Invention 64 provides the device management method according to invention 60 or 61, wherein:
the operating degree is a consumption of a consumable used in each of the network devices; and
the interchange suggestion information generating step calculates, based on the operating degrees obtained at the operating degree obtaining step, the average value and the standard deviation of consumed quantities consumed in the plurality of network devices in a specified time period and generates interchange suggestion information suggesting that a network device having a consumption greater than a first threshold and a network device having a consumption less than a second threshold shouldbe interchanged, the first threshold being a value obtained by adding the average value and the standard deviation and the second threshold being a value obtainedby subtracting the standard deviation from the average value.

This method provides advantages equivalent to those of the device management system set forth in invention 12.

### (Invention 65)

Invention 65 provides the device management method according to any of inventions 60 to 64, wherein the interchange suggestion information generating step reads installation location information of network devices to be interchanged from installation location information storage section storing installation location information of each of said network devices, said installation location information indicating the installation location and generates the interchange suggestion information based on the read installation location information.

This method provides advantages equivalent to those of the device management system set forth in invention 13.

### (Invention 66)

Invention 66 provides the device management method according to invention 65, wherein the installation location information is map information including at least the installation locations of the network devices.

This method provides advantages equivalent to those of the device management system set forth in invention 14.

### (Invention 67)

In order to achieve the obj ect described above, invention 67 provides a printer management method for communicably connecting a network printer with a printer management terminal that manages the network printers and managing the network printers by using the printer management terminal, comprising the steps of:
for each of said network printers,
detecting the utilization quantity of a consumable used in the network printer; and
sending the utilization quantity detected at the utilization quantity detecting step to the printer management terminal; and
for the printer management terminal,
receiving the utilization quantity information;
generating, based on the utilization quantity information received at the utilization quantity information receiving step, interchange suggestion information for suggesting interchange of the network printers; and
presenting the interchange suggestion information generated at the interchange suggestion information generating step;
wherein the interchange suggestion information generating step generates, based on the utilization quantity information received at the utilization quantity information receiving step, interchange suggestion information suggesting that a network printer having a higher utilization quantity and a network printer having a lower utilization quantity should be interchanged.

This method provides advantages equivalent to those of the printer management system set forth in invention 15.

The interchange suggestion information presenting step may be achieved in any manner in which interchange suggestion information is presented. For example, interchange suggestion information may be sent to a network printer or other terminal in response to a request from the printer or terminal, or may be presented simply be displaying or printing it. The same applies to the printer management method set forth in invention 68.

### (Invention 68)

In order to achieve the obj ect described above, invention 68 provides a printer management method for communicably connecting a network printer with a printer management terminal that manages the network printers and managing the network printers by using the printer management terminal, comprising the steps of:
for each of said network printers,
detecting the utilization quantity of a consumable used in the network printer; and
sending the utilization quantity detected at the utilization quantity detecting step to the printer management terminal; and
for the printer management terminal,
receiving the utilization quantity information;
generating, based on the utilization quantity information received at the utilization quantity information receiving step, interchange suggestion information for suggesting interchange of the network printers; and
presenting the interchange suggestion information generated at the interchange suggestion information generating step;
wherein the interchange suggestion information generating step generates, based on the utilization quantity information received at the utilization quantity information receiving step, interchange suggestion information suggesting that a network printer having a utilization quantity higher than a first reference value among the network printers and a network printer having a utilization quantity lower than a second reference value among the network printers should be interchanged.

This method provides advantages equivalent to those of the printer management system set forth in invention 16.

### (Invention 69)

Invention 69 provides the printer management method according to invention 67 or 68, wherein:
the interchange suggestion information generating step calculates the average value and the standard deviation of the utilization quantity of the plurality of network printers based on the utilization quantity information received at the utilization quantity information receiving step and generates interchange suggestion information suggesting that a network printer having a utilization quantity higher than a first threshold and a network printer having a utilization quantity lower than a second threshold should be interchanged, the first threshold being a value obtained by adding the average value and the standard deviation and the second threshold being a value obtained by subtracting the standard deviation from the average value.

This method provides advantages equivalent to those of the printer management system set forth in invention 17.

### (Invention 70)

Invention 70 provides the printer management method according to invention 69, wherein:
the interchange suggestion information generating step generates interchange suggestion information suggesting that a network printer having the nth highest utilization quantity counting from the highest among the network printers having utilization quantity higher than the first threshold and a network printer having the nth lowest utilization quantity counting from the lowest among the network printers having utilization quantity lower than the second threshold should be interchanged.

This method provides advantages equivalent to those of the printer management system set forth in invention 18.

### (Invention 71)

Invention 71 provides the printer management method according to invention 67 or 68, wherein the utilization quantity is the number of sheets used in printing on each of the network printers, and
the interchange suggestion information generating step calculates, based on the utilization quantity information received at the utilization quantity information receiving step, the average value and the standard deviation of the numbers of sheets printed on the plurality of network printers in a specif ied time period and generates interchange suggestion informationsuggestingthatanetworkprinterhavingthenumber of printed sheets that is greater than a first threshold and a network printer having the number of printed sheets that is smaller than a second threshold should be interchanged, the first threshold being a value obtainedby adding the average value and the standard deviation and the second threshold being a value obtained by subtracting the standard deviation from the average value.

This method provides advantages equivalent to those of the printer management system set forth in invention 19.

### (Invention 72)

Invention 72 provides the printer management method according to invention 69 or 70, wherein the utilization quantity is the remaining quantity of toner or ink used in printing on each of the network printers.

This method provides advantages equivalent to those of the printer management system set forth in invention 20.

### (Invention 73)

Invention 73 provides the printer management method according to any of inventions 67 to 72, wherein:
the interchange suggestion information generating step reads the installation location information of network printers to be interchanged from installation location information storage section storing installation location information of each of said network printers, said installation location information indicating the installation location and generates the interchange suggestion information based on the read installation location information.

This method provides advantages equivalent to those of the printer management system set forth in invention 21.

### (Invention 74)

Invention 74 provides the printer management method according to invention 73, wherein the installation location information is map information including at least the installation locations of the network printers.

This method provides advantages equivalent to those of the printer management system set forth in invention 22.

### BRIEF DESCRIPTION OF THE DRAWINGS

FIG. 1 is a block diagram showing a configuration of a network system to which the present invention is applied;
FIG. 2 is a block diagram showing a configuration of a printer management server 100;
FIG. 3 shows a data structure of a status information registration table 400;
FIG. 4 shows a data structure of an installation location information registration table 440;
FIG. 5 is a flowchart of a process for registering status information;
FIG. 6 is a flowchart of a process for presenting interchange suggestion information;
FIG. 7 is a block diagram showing a configuration of a network printer 200;
FIG. 8 is a flowchart of a process for registering basic printer information;
FIG. 9 is a flowchart of a process for generating status information; and
FIG. 10 is a flowchart of a process for presenting interchange suggestion information.

### DETAILED DESCRIPTION OF THE PREFERRED EMBODIMENTS

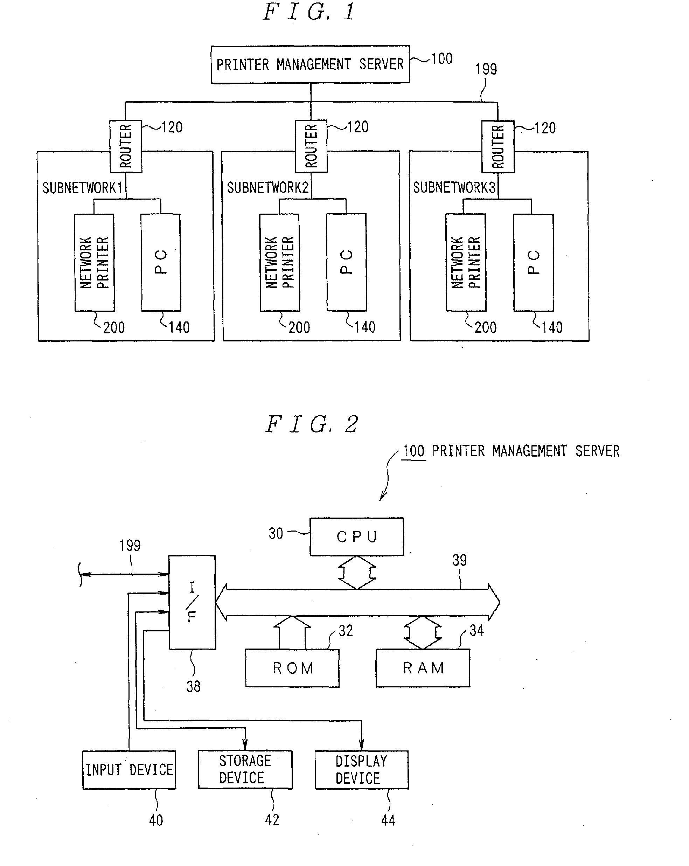

A first embodiment of the present invention will be described below with reference to the accompanying drawings. FIGS. 1 to 9 show a device management system, a printer management system, a printer management terminal and a program for the printer management terminal, and a device management method according to the first embodiment.

According to the first embodiment, the device management system, printer management system, printer management terminal and program, and device management method are applied to a case where a printer management server 100 manages usage of consumables used in printing on network printers 200, as shown in FIG. 1.

A configuration of a network system to which the present invention is applied will be first described with reference to FIG. 1.

FIG. 1 is a block diagram showing a configuration of the network system to which the present invention is applied.

A printer management server 100 that manages network printers 200 and a number of routers 120 are connected to the Internet 199, as shown in FIG. 1. Connected to each router 120 are a personal computer (hereinafter abbreviated to PC) 140 and a network printer 200 that prints data in response to a print request from the PC 140. The PC 140 and the network printer 200 are connected to the Internet 199 through the router 120. The router 120, PC 140, and network printer 200 forms a subnetwork. Such a subnetwork is may be built for each section in a company, for example. While only one PC 140 and one network printer 200 are shown in each subnetwork in FIG. 1 for the sake of clarity, a number of PCs 140 and network printers 200 are connected to the subnetwork in practice.

A configuration of the printer management server 100 will be described below with reference to FIG. 2.

FIG. 2 is a block diagram showing a configuration of the printer management server 100.

The printer management server 100 includes a CPU 30 that controls operations and the entire system according to a control program, a ROM 32 having predetermined areas in which programs such as a control program for the CPU 30 are pre-stored, a RAM 34 for storing data read from the ROM 32 and results of operations that are required by the CPU 30 in a series of operations, and an interface (I/F) 38 that passes data to and from an external device, as shown in FIG. 2. These components are interconnected with each other through a bus 39, which is a signal line transmitting data, in such a manner that they can exchange data with each other.

Connected to the I/F 38 are external devices such as an input device 40, which is a human-interface, including a keyboard and a mouse, through which data can be entered, a storage device 42 for storing data and tables as files, a display device 44 for displaying screen images according to image signals, and a signal lines for connecting to the Internet 199.

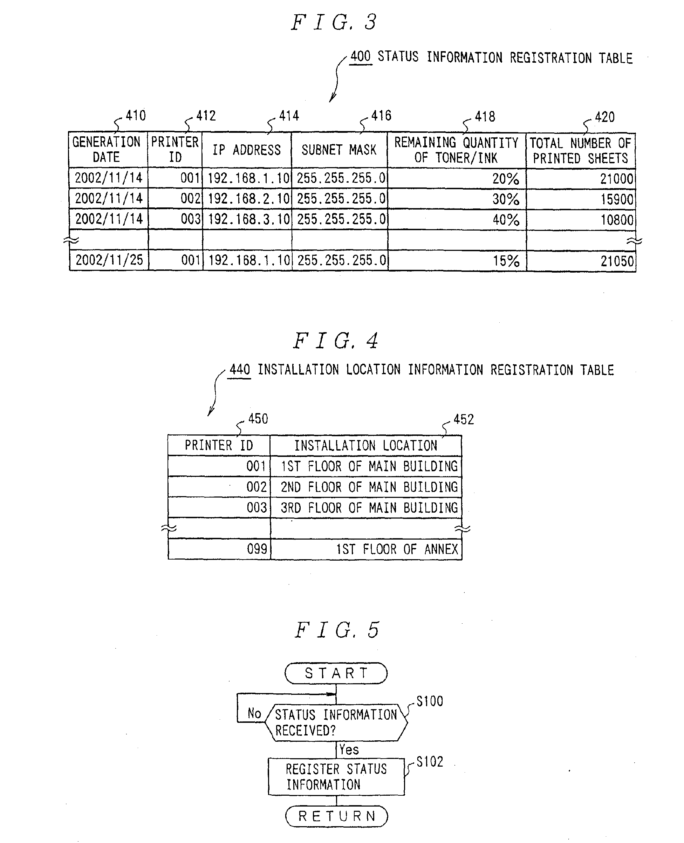

The storage device 42 stores a status information registration table 400 for entering status information indicating the status of the network printer 200 and an installation location information registration table 440 containing an installation location information indicating the location of network printers 200, as shown in FIGS. 3 and 4.

FIG. 3 shows a data structure of the status information registration table 400.

For eachpiece of status information, one record is entered in the status information registration table 400. Anew record is added each time status information is received from a network printer 200. Each record consists of a field 410 containing the date and time of generation of the status information, a field 412 containing a printer ID that uniquely identifies a network printer 200, a field 414 containing an IP address assigned to the network printer 200, a field 416 containing a subnet mask assigned to the network printer 200, a field 418 containing the remaining quantity of toner or ink (herein after referred to as a remaining quantity of toner and the like) used in printing on the network printer 200, and a field 420 containing the total number of paper sheets (hereinafter referred to as the total number of printed sheets) used in printing on the network printer 200.

In the example shown in FIG. 3, the record at the top of the table contains generation date and time "2002/11/14," a printer ID, "001," an IP address "192.168.1.10," a subnet mask "255.255.255.0," a remaining quantity of toner and the like "20%," and the total number of printed sheets "21000." This represents that the IP address "192.168.1.10" and the subnetmask "255.255.255.0" are assigned to the network printer 200 identified by the printer ID "001" and the remaining quantity of toner and the like and the total number of sheets as of November 14, 2000, are 20% and 21,000, respectively.

FIG. 4 shows a data structure of the installation location information registration table 440.

For each printer ID, one record is entered in the installation location information registration table 440. Each record includes a field 450 containing a printer ID and a field 452 containing an installation location.

In the example shown in FIG. 4, the record at the top of the table contains a printer ID "001" and an installation location "1st floor of main building." This represents that the network printer 200 identified by the printer ID "001" is installed on the first floor of the main building.

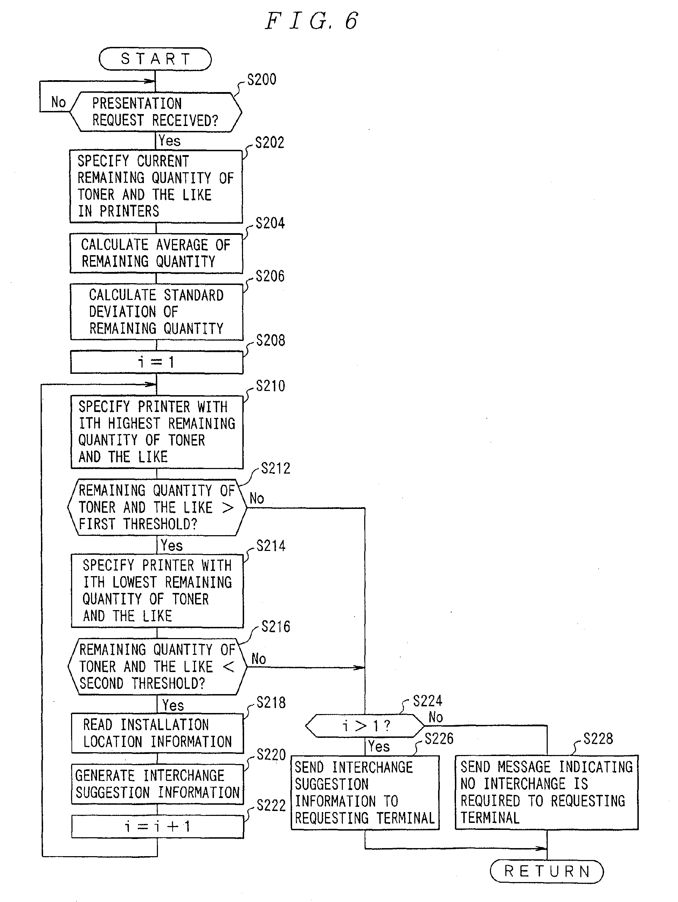

The CPU 30, which is implemented by a micro processing unit MPU or the like, activates predetermined programs stored in a predetermined area in the ROM 32 and executes a status information registration process and a interchange suggestion information presenting process shown in the flowcharts shown in FIGS. 5 and 6 according to the programs in a time-sharing manner.

The status information registration process will be detailed first with reference to FIG. 5.

FIG. 5 shows a flowchart of the status information registration process.

The status information registration process receives status information from network printers 200 and registers it. When this process is initiated in the CPU 30, the process proceeds to step S100 as shown in FIG. 5.

At step S100, determination is made as to whether status information has been received and if (YES), the process proceeds to step S102, where the received status information is registered in the status information registration table 400, then the process ends and returns control to the previous process.

On the other hand, if it is determined at step S100 that no status information is received (No), the process waits at step S100 until status information is received.

The interchange suggestion information will be detailed below with reference to FIG. 6.

FIG. 6 shows a flowchart of interchange suggestion information presenting process.

The interchange suggestion information presetting process presents interchange suggestion information concerning interchange of network printers 200 in response to a presentation request from a PC 140, network printer 200, or other terminals. When this process is executed at the CPU 30, the process first proceeds to step S200, as shown in FIG. 6.

At step S200, determination is made as to whether a presentation request has been received. If it is determined that a presentation request has been received (Yes), the process proceeds to step S202. Otherwise (No), the process waits at step S200 until a presentation request is received.

At step S202, the status information registration table 400 is checked to determine the remaining quantity of toner and the like in each network printer 200, and, then at step S204, the average of the remaining quantity of toner and the like in the network printers 200 is calculated. Then, the process proceeds to step S206, where the standard deviation of the remaining quantity of toner and the like is calculated. The process then proceeds to step S208.

At step S208, "1" is assigned to integer-type variable "i." Then the process proceeds to step S210, where the network printer 200 having the ith highest remaining quantity of toner and the like in the network printers 200 is determined. Then the process proceeds to step S212, where determination is made as to whether the remaining quantity of toner and the like of that network printer 200 is higher than the average value plus the standard deviation (hereinafter called the first threshold). If it is determined that the remaining quantity of toner and the like is higher than the first threshold (Yes) , the process proceeds to step S214.

At step S214, the network printer 200 having the ith lowest remaining quantityof toner and the like in the networkprinters 200 is determined. Then the process proceeds to step S216, where determination is made as to whether the remaining quantity of toner and the like of that network printer is lower than a value obtained by subtraction of the standard deviation from the average (hereinafter called the second threshold). If it is determined that the remaining quantity of toner and the like is lower than the second threshold (Yes) , the process proceeds to step S218.

At step S218, the printer IDs of the printers determined at steps S210 and S214 are obtained from the status information and the installation locations associated with the obtained printer IDs are read from the installation location information registration table 440. Then the process proceeds to step S220.

At step S220, interchange suggestion information is generated according to the installation location information. In particular, interchange suggestion information is generated from the installation location information at step S220 that indicates the location at which the network printer 200 determined at step S210 and the location at which the network printer 200 determined at step S214 and that the network printers 200 should be interchanged. If the network printer 200 identified by the printer ID "0001" is to be interchanged with the network printer 200 identified by the printer ID "0002" in the example shown in FIG. 4, interchange suggestion information may be for example "Interchange the printer installed on the first floor of the main building with the printer installed on the second floor of the main building."

The process then proceeds to step S222, where the value of variable i plus "1" is assigned as a new value of variable i, then proceeds to step S210.

On the other hand, if it is determined at step S212 that the remaining quantity of toner and the like of the network printer 200 determined at step S210 is lower or equal to the first threshold (No) , the process proceeds to step S224, where determination is made as to whether the variable i is greater than "1." If so (Yes), the process proceeds to step S226, where the interchange suggestion information generated at step S220 is sent to the requesting terminal that has issued the presentation request. Then the process ends and returns control to the previous process.

On the other hand, if it is determined at step S224 that the variable i is less than or equal to 1 (No), the process proceeds to step S228, where notification is sent to the terminal that has issued the presentation request to indicate that interchange of the network printer 200 is not required. Then the process ends and returns control to the previous process.

On the other hand, if it is determined at step S216 that the remaining quantity of toner and the like of the network printer 200 determined at step S214 is greater than or equal to the second threshold (No), the process proceeds to step S224.

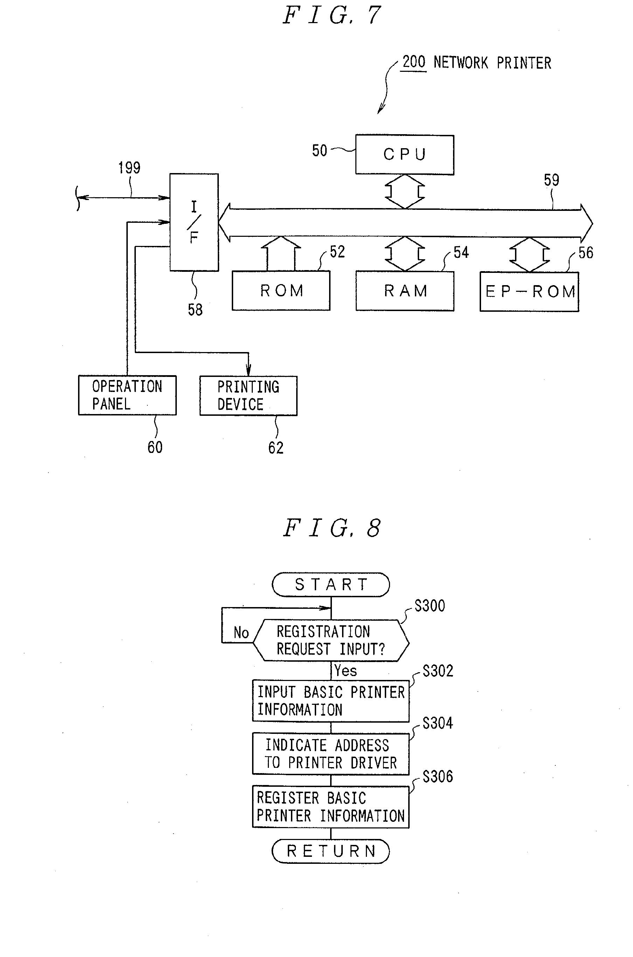

A configuration of a network printer 200 will be detailed below with reference to FIG. 7. The other network printers 200 have the same functions as the network printer 200.

FIG. 7 is a block diagram showing a configuration of a network printer 200.

The network printer 200 includes a CPU 50 controlling operations and the entire system according to a control program, a ROM 52 having predetermined areas in which programs such as a control program for the CPU 50 are pre-stored, a RAM 54 for storing data read from the ROM 52 and results of operations that are required by the CPU 50 in a series of operations, an EPROM 56 for storing basic information about the printer and other information that must be held in a nonvolatile manner, and an interface (I/F) 58 that passes data to and froman external device, as shown in FIG. 7. These components are interconnected with each other through a bus 59, which is a signal line transmitting data, in such a manner that they can exchange data with each other.

Connected to the I/F 58 are external devices such as an operation panel 60, which is a human-interface, through which data can be entered, a printing device 62 that performs printing based on print data, and a signal lines for connecting to the Internet 199.

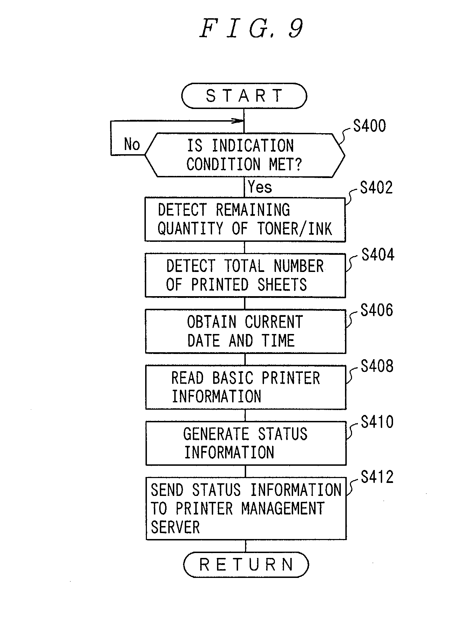

The CPU 50, which is implemented by a micro processing unit MPU or the like, activates predetermined programs stored in a predetermined area in the ROM 52 and executes a basic-printer-information registration process and a status information generation process shown in the flowcharts shown in FIGS. 8 and 9 according to the programs in a time-sharing manner.

First the basic-printer-information registration process will be described below in detail with reference to FIG. 8.

FIG. 8 shows a flowchart of the basic-printer-information registration process.

The basic-printer-information registration process registers information registers basic information required for communication between a network printer 2 00 and the printer management server 100. When this process is initiated in the CPU 50, the process proceeds to step S300 as shown in FIG. 8.

At step S300, determination is made as to whether a request for registration of basic printer information has been inputted through an operation panel 60. If it is determined that a registration request is inputted (Yes), the process proceeds to step S302. Otherwise (No), the process waits at step S300 until a registration request is inputted.

At step S302, basic printer information is inputted through the operation panel 60. The basic printer information may include an IP address, subnet mask, default gateway address, printer ID to assigned to the network printer 200, the IP address of the printer management server 100 (hereinafter called the server IP address) and an IP port address to be used in communication with the printer management server 100, and a status indication condition for indicating status information to a user. Status indication conditions may include for example a condition that status information be indicated when an update is made to the basic printer information, at specified dates and times, or at specified time intervals, or a condition that status information be indicated when the remaining quantity of toner and the like has decreased below a predetermined threshold, or a condition that a failure be indicated if one occurs in the network printer.

The process then proceeds to step S304, where the inputted IP address, subnet mask, and default gateway address are indicated to the printer driver to set them in the network printer 200. Then the process proceeds to step S306, where the inputted basic printer information is stored in the EPROM 56. Then the process ends by returning control to the previous process.

Next, the status information generation process will be described with reference to FIG. 9.

FIG. 9 is a flowchart of the status information generation process.

The status information generation process generates status information according to status an information indication condition. When this process is initiated in the CPU 50, the process proceeds to step S400 as shown in FIG. 9.

At step S400, determination is made as to whether any of the status information indication conditions is met. If it is determined that a status information indication condition is met (Yes), the process proceeds to step S402. Otherwise (No) , the process waits at step S400 until a status information indication condition is met.

At step S402, the remaining quantity of toner and the like of the network printer 200 is detected, then the process proceeds to step S404, where the total number of sheets printed on the network printer 200 is detected, then the process proceeds to step S406, where the current date and time is obtained from a source such as a timer (not shown). Then the process proceeds to step S408, wherebasic printer information is read from the EPROM 56. The process then proceeds to step S410.

At step S410, the remaining quantity of toner and the like and the total number of printed sheets detected at steps S402 and S404, respectively, and the basic printer information read at step S408 are used to generate status information. Then the process proceeds to step S412, where status information generated based on the server ID and port address included in the basic printer information is sent to the printer management server 100. Then the process ends and returns control to the previous process.

Operations of the present embodiment will be described below.

First, a process for registering basic printer information in a network printer 200 will be described.

A user enters a basic printer information registration request through the operation panel 60 of a network printer and enters basic printer information according to guidance displayed on menus or the like.

When the basic printer information is entered in the network printer 200, the IP address, subnet mask, and default gateway address included in the entered basic printer information are indicated to the printer drover in the network printer 200. This causes these addresses to be set in the network printer and makes the network printer to be ready to communicate with the printer management server 100. The process proceeds to step S306 and the entered basic printer information is stored in the EPROM 56.

A process for a network printer 200 to indicate status information will be described below.

If a status information indication condition, "At specified time intervals," is set as a status information indication condition in a network printer 200, steps S402 to S408 are performed to detect the remaining quantity of toner and the like and the total number of sheets printed on the network printer 200, obtain the current date and time, and read basic printer information from the EPROM 56. Then, the step S410 is performed to generate status information based on the remaining quantity of toner and the like, total number of printed sheets, current date and time, and basic printer information. Status information generated based on the server IP address and port number included in the read basic printer information are sent to the printer management server 100.

When receiving the status information, the printer management server 100 registers the status information in the status information registration table 400 at step S102.

A process for maintaining a network printer 200 will be described below.

To maintain a network printer 200, the user or administrator of the network printer 200 requests the presentation of interchange suggestion information on a PC 140.

When the presentation of interchange suggestion information is requested on a PC 140, the PC 140 sends a presentation request to the printer management server 100.

When receiving the presentation request, the printer management server 100 performs steps S202 through S208 to determine the current remaining quantity of toner and the like of each network printer 200 with reference to the status information registration table 400, calculates the average and standard deviation of the remaining quantity of toner and the like of the network printers 200, andassigns "1" to variable i.

Then, step S210 is performed to determine the network printer 200 having the ith highest remaining quantity of toner and the like in the network printers 200. Here, because "1" is assigned to variable i, the network printer 200 having the highest remaining quantity of toner and the like is determined. If the remaining quantity of toner and the like of that network printer 200 is higher than a first threshold, step S214 is performed to determine the network printer 200 having the ith lowest remaining quantity of toner and the like in the network printers is determined. Here, because "1" is assigned to variable i, the network printer 200 with the lowest remaining quantity of toner and the like is determined. If the remaining quantity of toner and the like of that network printer 200 is lower than a second threshold, steps S218 and S220 are performed to read the installation location information of the network printers 200 to be interchanged from the installation location information registration table 440. Interchange suggestion information is generated based on the read installation location information. The interchange suggestion information suggests that the network printer 200 having the lowest remaining quantity of toner and the like and the network printer 200 having the highest remaining quantity of toner and the like should be interchanged.

Then, step S222 is performed to assign the value of variable i plus "1" as a new value of variable i. Steps S210 through S220 are repeated to generate interchange suggestion information indicating that the network printer 200 having the second highest remaining quantity of toner and the like that is higher than the first threshold and the network printer 200 having the second lowest remaining quantity of toner and the like that is lower than the second threshold should be interchanged. Likewise, interchange suggestion information indicating that the network printer 200 having the third highest remaining quantity of toner and the like and the network printer 200 having the third lowest remaining quantity of toner and the like should be interchanged is generated. Then, interchange suggestion information indicating that the network printer 200 having the nth highest (n > 3) should be interchanged with the one having the nth lowest remaining quantity of toner and the like is generated.

If there is no network printer 200 having a remaining quantity of toner and the like higher than the first threshold or not network printer 200 having a remaining quantity of toner and the like lower than the second threshold, steps S224 and S226 areperformedto send the generated interchange suggestion information to the requesting PC 140.

When the interchange suggestion information is received at the PC 140, the received interchange suggestion information is displayed on its display. The user or administrator of the network printer 200 interchanges the indicated network printers 200 according to the displayed interchange suggestion information. The remaining quantity of toner and the like of network printers used in the same environment at the same installation location decrease at similar, if not identical, rates. For example, the remaining quantity of toner and the like of network printers 200 installed in a section in a company that handles a large number of documents may be relatively low. In contrast, the remaining quantity of toner and the like of network printers 200 installed in a section that handles a small amount of documents are relatively high. Therefore, the remaining quantity of toner and the like of network printers 200 can be made uniform by interchanging the network printers 200 on a regular basis according to interchange suggestion information.

In this way, according to the present embodiment, the remaining quantity of toner and the like or the like of network printers 200 are detected and status information including the detected remaining quantity of toner and the like are sent to the printer management server 100. The printer management server 100 receives the status information, generates interchange suggestion information based on the status information it received that suggests that a network printer 200 with a higher remaining quantity of toner and the like and a network printer 200 with a lower remaining quantity of toner and the like should be interchanged, and presents the generated interchange suggestion information in response to a request.

Interchanging network printers on a regular basis in this way can keep the remaining quantity of toner and the like or the remaining quantity of other consumables of the network printers 200 uniform. Consequently, the possibility of convergence of loads on particular network printers 200 can be reduced and the life of the network printers 200 on the whole can be increased. Moreover, when a user wants to use a network printer 200, a network printer 200 that is not desired by the user is not selected. Therefore, the possibility of increase in time and labor required or a user to use a network printer 200 can be reduced as compared with the prior art and higher usability can be provided for the user.

Furthermore, according to the present embodiment, the printer management server 100 calculates the average and standard deviation of the remaining quantity of toner and the like of network printers 200 based on status information it received and generates interchange suggestion information that suggests that a network printer having a remaining quantity of toner and the like higher than the first threshold, which is the average value plus the standard deviation, and a network printer having a remaining quantity of toner and the like lower than the second threshold, which is a value obtained by subtraction of the standard deviation from the average, should be interchanged.

This suggestion encourages interchange of network printershavingaparticularlyhighandnetworkprintershaving a particularly low remaining quantity of toner and the like, but not network printers 200 having average remaining quantity of toner and the like. Consequently, uniformity of remaining quantity of toner and the like can be efficiently maintained and time and labor required for interchanging network printers 200 can be reduced.

Furthermore, the printer management server 100 according to the present embodiment generates interchange suggestion information that suggests that the network printer 200 having the ith highest remaining quantity of toner and the like in the network printers with remaining quantity of toner and the like higher than the first threshold should be interchanged with the network printer 200 having the ith lowest remaining quantity of toner and the like in the network printers with remaining quantity of toner and the like lower than the second threshold.

This suggestion encourages interchange of the network printer 200 having the highest remaining quantity of toner and the like and the network printer 200 having the lowest remaining quantity of toner and the like. Likewise, the network printer 200 having the second, third, ..., ith highest remaining quantity of toner and the like are interchanged with the network printer 200 having the second, third,..., ith lowest remaining quantity of toner and the like. Thus, the uniformity of remaining quantity of toner and the like can be maintained more efficiently.

Moreover, the printer management server 100 according to the present embodiment reads installation location information of network printers 200 to be interchanged from the installation location information registration table 440 and generates interchange suggestion information based on the read installation location information.

This helps the user identify the location of the network printers 200 tobe interchanged and facilitates the interchange of the network printers 200.

The printer management server 100 in the first embodiment corresponds to the printer management terminal set forth in invention 15, 16, 21, 23 to 26, 28, or 29. The storage device 42 corresponds to the installation location information storage section set forth in invention 6, 21, 29, 36, or 51. The network printers 200 correspond to the network devices set forth in invention 1 to 4, 6, 31 to 34, or 36. Step S100 corresponds to the utilization quantity information receiving section set forth in invention 15 to 17, 23 to 25, or 45 to 47. Step S220 corresponds to interchange suggestion information generating section set forth in invention 1 to 4, 6, 15 to 18, 21, 23 to 26, 29, 31 to 34, 36, 45 to 48, or 51.

In the first embodiment, step S226 corresponds to the interchange suggestion information presenting section set forth in invention 15, 16, 23, 24, 45, or 46. Step S402 corresponds to the utilization quantity detecting section set forth in invention 15 or 16 and step S412 corresponds to the utilization quantity information sending section set forth in invention 15 or 16. Step S402, S412, and S100 correspond to the utilization degree obtaining section set forth in invention 1 to 3, or 31 to 33. The toner and the like correspond to the consumable set forth in invention 1, 2, 15, 16, 23, 24, 31, 32, 45, or 46. The remaining quantity of toner and the like corresponds to the utilization degree set forth in invention 1 to 4, or 31 to 34.

The status information in the first embodiment corresponds to the utilization quantity information set forth in invention 15 to 17, 23 to 25, or 45 to 49.

In the first embodiment, the printer management server 100 corresponds to the printer management terminal set forth in invention 67 or 68, the storage device 42 corresponds to the installation location information storage section set forth in invention 58 or 73, and the network printers 200 correspond to the network devices set forth in invention 53 to 56, or 58. Step S100 corresponds to the utilization quantity information receiving step set forth in invention 67 to 69. Step S220 corresponds to the interchange suggestion information generating step set forth in invention 53 to 56, 58, 67 to 70, or 73. Step S226 corresponds to the interchange suggestion information presenting step set forth in invention 67 or 68.

Step S402 in the first embodiments corresponds to the utilization quantity detecting step set forth in invention 67 or 68, step S412 corresponds to the utilization quantity information sending step set forth in invention 67 or 68, and steps S402, S412, and S100 correspond to the utilization degree obtaining step set forth in invention 53 to 55. The toner and the like correspond to the consumable set forth in invention 53, 54, 67, or 68. The remaining quantity of toner and the like corresponds to the utilization degree set forth in invention 53 to 56. The status information corresponds to utilization quantity information set forth in invention 67 to 69.

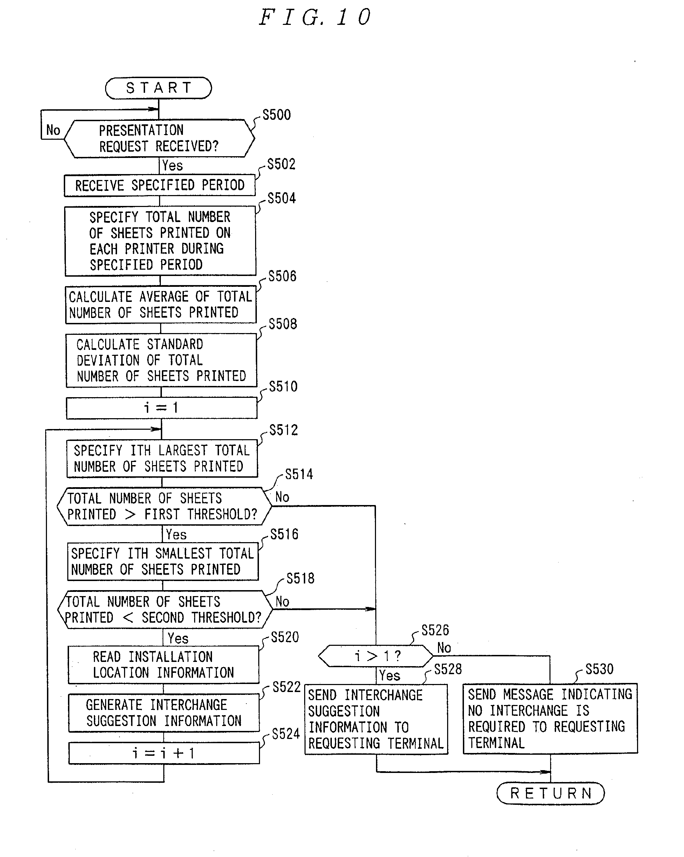

A second embodiment of the present invention will be described below with reference to the accompanying drawings. FIG. 10 shows a device management system, a printer management system, a printer management terminal, a program for the printer management terminal, and a device management method according to the second embodiment of the present invention. In the following description, only those elements of the second embodiment that are different from those in the first embodiment will be described. The same elements as those in the first elements are labeledwith the same reference numerals and the description of which will be omitted.

According to the second embodiment, the device management system, printer management system, printer management terminal and program, and device management method of the present invention are applied to a case where a printer management server 100 manages the consumption of a consumable used in network printers 200. The second embodiment differs from the first embodiment in that the total number of sheets printed on the network printers is managed.

A CPU 30 activates a predetermined program stored in a predetermined area in a ROM 32 and performs a process for presenting interchange suggestion information as shown in a flowchart in FIG. 10 according to the program, instead of the interchange suggestion information presenting process shown in FIG. 6.

FIG. 10 shows a flowchart of the process for presenting interchange suggestion information.

Thisprocesspresentsinterchangesuggestioninformation in response to a presentation request. When executed in the CPU 30, the process proceeds to step S500 as shown in FIG. 10.

At step S500, determination is made as to whether a presentation request is received. If it is determined that a presentation request is received (Yes) , the process proceeds to step S502. Otherwise (No), the process waits at step S500 until a presentation request is received.

At step S502, a specified period in which the total number of sheets printed is managed is received. Then the process proceeds to step S504, where the total number of sheets printed each of the network printers 200 in the specified period is determined from of a status information registration table 400. In particular, at step S504, the total number of sheets printed on printers to be managed is obtained from status information generated on the start data of the specif iedperiod, the total number of sheets printed on the printers is obtained from status information on the end date of the specifiedperiod, and the total number of sheets printed on the start data is subtracted from the total number of sheets printed on the end date to determine the total number of sheets printed during the specified period. If no status information generated on the start date or the end date is found, the total number of printed sheets is obtained from status information generated on the date closest to the start or end date.

The process then proceeds to step S506, where the average of the total numbers of sheets printed on the network printers 200 in the specified period is calculated. Then the process proceeds to step S508, where the standard deviation of the total numbers of sheets printed on the network printers 200 in the specified period is calculated and then the process proceeds to step S510.

At step S510, "1" is assigned to variable i and then the process proceeds to step S512, where the network printer 200 with ith largest total number of printed sheets in the network printers is determined. Then the process proceeds to step S514, where determination is made as to whether the total number of sheets printed on the network printer 200 determined is greater than a first threshold. If so (Yes), the process proceeds to step S516.

At step S516, the network printer with the ith smallest total number of printed sheets in the network printers is determined. Then the process proceeds to step S518, where the total number of sheets printed on the network printer 200 determined is less than a second threshold. If it is determined that the total number of printed sheets is smaller than the second threshold (Yes), the process proceeds to step S520.

At step S520, the printer ID of the network printers 200 determined at steps S512 and S516 are obtained from the status information and items of installation location information associated with the obtained printer IDs are read from the installation location information registration table 440. Then the process proceeds to step S522.

At step S522, interchange suggestion information is generated based on the read installation location information in a manner similar to that in the first embodiment. Then the process proceeds to step S524, where the value of variable i plus "1" is assigned as a new value to variable i. Then the process proceeds to step S512.

On the other hand, if it is determined at step S514 that the total number of sheets printed on the network printer determined at step S512 is less than or equal to the first threshold (No), the process proceeds to step S526, where determination is made as to whether the value of variable i is greater than 1. If it is determined that the value of variable i is greater than 1 (Yes), the process proceeds to step S528, where the interchange suggestion information generated at step S522 is sent to the requesting terminal. Then the process ends and returns control to the previous process.

On the other hand, if it is determined at step S526 that the value of variable i is less than or equal to "1" (No), the process proceeds to step S530, where a notification that interchange of network printers is not required is sent to the requesting terminal that issued the presentation request. Then the process ends and returns control to the previous process.

If it is determined at step S518 that the total number of sheets printed on the network printer 200 determined at step S516 is greater than or equal to the second threshold (No), the process proceeds to step S526.

Operations of the second embodiment will be described below.

To maintain a network printer 200, a user or administrator of the network printer 200 requests for the presentation of interchange suggestion information on a PC 140 and specifies a period of interest.

When the presentation of interchange suggestion information is requested and the period is specified on the PC 140, the presentation request is sent o the printer management server 100 along with the specified period.

When receiving the presentation request, the printer management server 100 performs steps S502 through S510 to receive the specified period, determine the total number of sheets printed on each of the network printer 200 in the specified period from the status information registration table 400, calculate the average and standard deviation of the total numbers of sheets printed on the network printers in the specified period, and assigns "1" to variable i.

Then, step S512 is performed to determine the network printer 200 with the ith largest total number of printed sheets in the network printers 200. Here, because "1" is assigned to variable i, the network printer 200 with the largest total number of printed sheets is determined. If the total number of printed sheets printed on the network printer 200 in the specified period is greater than a first threshold, step S516 is performed to determine the network printer 200 with the ith least total number of printed sheets. Here, because "1" is assigned to variable i, the network printer 200 with the smallest number of printed sheets is determined. If the total number of sheets printed on the network printer 200 is less than a second threshold, steps S520 and S522 are performed to read the installation location information of the network printers 200 to be interchanged is read from the installation location information registration table 440 and interchange suggestion information is generated based on the read installation location information. The interchange suggestion information suggests that the network printer 200 with the largest total number of printed sheets and the network printer 200 with the smallest total number of printed sheets should be interchanged.

Then, step S524 is performed to assign the value of variable i plus "1" as a new value of variable i. Steps S512 through S522 are repeated to generate interchange suggestion information that suggests the network printer 200 with the second largest total number of printed sheets that is greater than the first threshold and the network printer 200 with the second smallest total number of printed sheets that is smaller than the second threshold should be interchanged. In this way, interchange suggestion information is generated that suggests that the network printers 200 with the third largest total number of printed sheets and the network printer with the third smallest total number of printed sheets should be interchanged. Finally, interchange suggestion information is generated that suggests the network printer 200 with the nth (n > 3) largest total number of printed sheets and the network printer 200 with the nth smallest total number of printed sheets should be interchanged.

When no additional network printer 200 with the total number of printed sheets greater than the first threshold or no additional network printer 200 with the total number of printed sheets smaller than the second threshold is found, steps S526 and 5528 are performed to send generated interchange suggestion information to the requester's PC 140.

When the PC 140 receives the interchange suggestion information, the PC 140 displays the interchange suggestion information on its display. The user of administrator of the network printer 200 interchanges the network printers 200 to be interchanged according to the interchange suggestion information. After network printers in a location are used in the same environment for some time, the total numbers of sheets printed on them converges to a similar level. For example, the total number of sheets printed on each network printer 200 in a section in a company that handles a large number of documents may be greater, whereas the total number of sheets printed on each network printer 200 in a section that handles a smaller number of documents may be smaller. Therefore, uniformity of the total numbers of sheets printed on the network printers 200 may be maintained by interchanging network printers 200 on a regular basis.

Basic printer information is registered in the network printers 200 and status information is indicatedby the network printers 200 in the same manner as in the first embodiment.

Thus, according to the second embodiment, a network printer 200 detects the total number of sheets printed on the network printer 200 and sends status information including the detected total number of printed sheets to the printer management server 100. The printer management server 100 receives the status information, generates, based on the status information, interchange suggestion information suggesting that a network printer 200 with a larger total number of printed sheets and a network printer 200 with a smaller total number of printed sheets should be interchanged, and presents the generated interchange suggestion information in response to a request.

Interchanging network printers on a regular basis in this way can keep the remaining quantity of toner and the like or the remaining quantity of other consumables of the network printers 200 uniform. Consequently, the possibility of convergence of loads on a particular network printer 200 can be reduced and the life of the network printers 200 on the whole can be increased. Moreover, when a user wants to use a network printer 200, a network printer 200 that is not desired by the user is not selected. Therefore, the possibility of increase in time and labor required or a user to use a network printer 200 can be reduced as compared with the prior art and higher usability can be provided for the user.

Furthermore, the printer management server 100 in the second embodiment calculates, based on the status information it received, the average value and standard deviation of the total numbers of sheets printed on the network printers 200 in a specified period and generates interchange suggestion information suggesting that a network printer 200 having a total number greater than a first threshold, which is the average value plus the standard deviation, and a network printer 200 having a total number smaller than a second threshold, which is a value obtained by subtracting the standard deviation from the average value, should be interchanged.

This suggestion encourages interchange of the network printers 200 having a particularly large and small number of printed sheets. Network printers 200 having standard total numbers of printed sheets will not be interchanged. Consequently, the uniformity of the total numbers of sheets printed on the network printers can effectively be maintained.

In the second embodiment described above, the printer management server 100 corresponds to the printer management terminal set forth in invention 15, 16, 21, 23 to 27, or 29. The storage device 42 corresponds to the installation location storage section set forth in invention 6, 21, 29, 36, or 51. The network printers 200 correspond to network devices set forth in invention 1 to 6, or 31 to 36. The step S100 corresponds to utilization quantity information receiving section set forth in invention 15 to 17, 19, 23 to 25, 27, 45 to 47, or 49. Step S404 corresponds to the utilization quantity detecting section set forth in invention 15 or 16. Step S412 corresponds to the utilization quantity information sending section set forth in invention 15 or 16.

In the second embodiment, steps S404, S412, and S100 correspond to the utilization degree obtaining section set forth in invention 1 to 3, 5, 31 to 33, or 35. Step S522 corresponds to the interchange suggestion information generating section set forth in invention 1 to 6, 15 to 19, 21, 23 to 27, 29, 31 to 36, 45 to 49, or 51. Step S528 corresponds to the interchange suggestion information presenting section set forth in invention 15, 16, 23, 24, 45, or 46. The sheets correspond to the consumable set fort in invention 1, 2, 5, 15, 16, 23, 24, 31 32, 35, 45, or 46. The total number of printed sheets corresponds to the utilization degree set forth in invention 1 to 5, or 31 to 35.

The status information in the second embodiment corresponds to the utilization quantity information set forth in invention 15 to 17, 19, 23 to 25, 27, 45 to 47, or 49.

In the second embodiment, the printer management server 100 corresponds to the printer management terminal set forth in invention 67 or 68. The storage device 42 corresponds to the installation location information storage section set forth in invention 58 or 73. The network printers 200 corresponds to the network devices set forth in inventions 53 to 58. Step S100 also corresponds to the utilization quantity information receiving step set forth in invention 67 to 69, or 71. Step S404 corresponds to the utilization quantity detecting step set forth in invention 67 or 68 and step S412 corresponds to the utilization quantity information sending step set forth in invention 67 or 68.

Steps S404, S412 and S100 in the second embodiment correspond to the utilization degree obtaining step set forth in invention 53 to 55, or 57, and step S522 corresponds to the interchange suggestion information generating step set forth in invention 53 to 58, 67 to 71, or 73. Step S528 corresponds to the interchange suggestion information presenting step set forth in invention 67 or 68. The sheets correspond to the consumable set forth in invention 53, 54, 57, 67, or 68. The total number of printed sheets corresponds to the utilization degree set forth in inventions 53 to 57. The status information corresponds to the utilization quantity information set forth in invention 67 to 69, or 71.

While interchange suggestion information is generated based on remaining quantity of toner and the like and the total number of sheets printed in network printers in the first and second embodiments, the presentation is not so limited. Interchange suggestion information can be generated based on the amount, rate, or frequency of operation, or other operation levels of network printers 200. An operation level herein represents the degree at which a network printer 200 (hardware) is actual working. For example, power consumption of a network printer 200 or the amount of operation of a movable part such as a roller may be detected and the detected value may be used as the operation level.

If the second embodiment is implemented in a similarmanner as in the first embodiment, "the remaining quantity of toner and the like" may be interchanged with "the total operating time of amovable part such as a roller" and "a remaining quantity of toner and the like of 20%" in the example described earlier maybe interchangedwith "a roller operating time of 100 hours," for example.

The network printers 200 here corresponds to the network devices set forth in invention 8 to 13, 38 to 43, or 60 to 65. Step S522 corresponds to the interchange suggestion information generating section set forth in invention 8 to 13, or 38 to 43 or the interchange suggestion information generating step set forth in invention 60 to 65.

While the installation locations of the network printers 200 are registered as descriptions in text form in the first and second embodiments, the present invention is not so limited. A map including at least the installation locations of the network printers may be registered as installation location information.

This allows the location of a network printer 200 to be readily found and therefore further facilitates interchange of network printers 200.

While the printer management server 100 is provided in the first and second embodiments, the present invention is not so limited. The functions of the printer management server 100 may be included in the network printers 200 or PCs 140 and the printer management server may be omitted.

While interchange suggestion information is presented as a visual display to a user in the first and second embodiments, the present invention is not so limited. The information may be presented as audio information, a printed information, or other sensory information.

While the average value and standard deviation of the remaining quantity of toner and the like of all networkprinters 200 are calculated in the first embodiment, the present invention is not so limited. The average value and standard deviation of the remaining quantity of toner and the like of some of the network printers 200 may be calculated.

While the average value and standard deviation of the total numbers of printed sheets in all network printers 200 are calculated in the second embodiment, the present invention is not so limited. The average value and standard deviation of the total numbers of printed sheets in some of the network printers 200 may be calculated.

In the first embodiment, interchange suggestion information is generated that suggests that the networkprinter 200 having the ith highest remaining quantity of toner and the like in network printers 200 having remaining quantity of toner and the like higher than a first threshold and the network printer 200 having the ith lowest remaining quantity of toner and the like in network printers 200 having remaining quantity of toner and the like lower than a second threshold should be interchanged. However, interchange suggestion information is not so limited. The following variations may be proposed.

In a first variation, a user specifies the number of network printers 200 to be interchanged. Interchange suggestion information is generated suggesting that the network printer 200 having the ith highest remaining quantity of toner and the like in the top specified number of network printers 200 counting from the one having the highest remaining quantity of toner and the like should be interchanged with the network printer 200 having the ith lowest remaining quantity of toner and the like in the bottom specified number of network printers 200 counting from the one having the lowest remaining quantity of toner and the like.

In a second variation, a user specifies first and second thresholds. Interchange suggestion information is generated suggesting that the network printer 200 having the ith highest remaining quantity of toner and the like in the network printers having remaining quantity of toner and the like higher than the first threshold should be interchanged with the network printer 200 having the ith lowest remaining quantity of toner and the like in the network printers having remaining quantity of toner and the like lower than the second threshold.

The number of printers to be interchangedor the thresholds may be specified by a user or may be preset.

While network printers 200 are managed in the first and second embodiments, other network devices may be managed such as network-capable projectors, scanners, digital cameras, digital video cameras, personal computers, PDAs (Personal Digital Assistants), network storages, audio devices, cellar phones, PHS ® (Personal Handyphone System) terminals, wristwatch PDAs, STBs (Set Top Boxes), POS (Point-Of-Sale) terminals, copying machines, facsimiles, phones, (including IP phones), switches, NCUs (Network Control Units), routers, hubs, bridges.

While control programs pre-stored in the ROM 32 are executed for performing the processes shown in the flowcharts in FIGS. 5 and 6 in the first embodiment, programs that are stored on a storage medium and define the procedures may be loaded into the RAM 34 and then executed.

While control programs pre-stored in the ROM 52 are executed for performing the processes shown in the flowcharts in FIGS. 8 and 9 in the first embodiment, programs that are stored on a storage medium that define the procedures may be loaded into the RAM 54 and executed.

While a control program pre-stored in the ROM 52 is executed for performing the process shown in the flowchart in FIG. 10 in the second embodiment, a program that is stored in a storage medium and defines the procedure may be loaded into the RAM 54 and executed.

The storage medium may by any computer-readable storage medium, whether electrically, magnetically, or optically readable, such as a semiconductor storage medium such as a RAM and ROM, a magnetic storage medium such as a flexible disk and hard disk, an optical storage medium such as a CD (Compact Disk), CD-V (Compact Disk Video), LD (Laser Disk), and DVD (Digital Versatile Disk), or a magneto-optical disk.

While the device management system, printer management system, printer management terminal and program and device management method according to the present invention are applied to a network system used with the Internet 199 in the first and second embodiments, the present invention is not limited to this. They may be applied to an intranet that provides communication under the same technologies as in the Internet 199. They may also be applied to other commonly used networks that provide communication under technologies different from Internet 199 technologies.

While in the first and second embodiments, the device management system, printer management system, printer management terminal and program, and device management method according to the present invention are applied to a case where a printer management server 100 manages the utilization quantity of consumables used in the network printers 200 as shown in FIG. 1, they can be applied to other cases without departing from the spirit of the present invention. For example, the following variations may be proposed.

In a first variation, in which gas stoves, oil stoves, or internal combustion engines of vehicles or the like are connected to a network, fuel for them may be treated as consumables and the first or second embodiment may be implemented in the same manner as described above.

Interchanging internal combustion engines on a regular basis according to interchange suggestion information can kept the usage level of fuel in the internal combustion engines uniform. Consequently, the possibility of convergence of loads on particular internal combustion engines can be reduced and the life of the internal combustion engines on the whole can be increased.

In a second variation, in which laser printers are connected to a network, photosensitive elements in the laser printers may be treated as consumables.

Interchanging laser printers on a regular basis according to interchange suggestion information can keep the usage levels of photosensitive elements in the laser printers uniform. Consequently, the possibility of convergence of loads on a particular laser printer can be reduced and the life of the laser printers on the whole can be increased.

In a third variation, in which projectors are connected to a network, the lamps of the projectors can be treated as consumables and the first or second embodiment may be implemented in the same manner as described above.

Interchanging projectors on a regular basis according to interchange suggestion information can kept the usage level of the lamps in the internal combustion engines uniform. Consequently, the possibility of convergence of loads on a particular projector can be reduced and the life of the projectors on the whole can be increased.

In a fourth variation, in which digital cameras containing a non-volatile memory, which has a limited number of write cycles, are connected to a network, the non-volatile memories canbe treated as consumables and the first or second embodiment may be implemented in the same manner as described above.

Interchanging digital cameras on a regular basis according to interchange suggestion information can keep the usage level of non-volatile memories in the digital cameras uniform. Consequently, the possibility of convergence of rewrites on particular non-volatile memories can be reduced and the life of the digital cameras on the whole canbe increased.

## Claims

1. A device management system communicably connecting a pluralityofnetworkdevicesandmanagingsaidnetworkdevices, comprising:
utilization degree obtaining section for obtaining an utilization degree of each of said network devices, said utilization degree indicating a degree of utilization of the consumable consumed by operation of said network device; and
interchange suggestion information generating section for generating, based on the utilization degree obtained by said utilization degree obtaining section, interchange suggestion information for suggesting interchange of said network devices;
wherein said interchange suggestion information generating section generates, based on the utilization degree obtained by said utilization degree obtaining section, the interchange suggestion information suggesting that a network device having a higher utilization degree among said network devices and a network device having a lower utilization degree among said network devices should be interchanged.

2. A device management system communicably connecting a plurality of network devices andmanaging said network devices, comprising:
utilization degree obtaining section for obtaining an utilization degree of each of said network devices, said utilization degree indicating a degree of utilization of the consumable consumed by operation of said network device; and
interchange suggestion information generating section for generating, based on the utilization degree obtained by said utilization degree obtaining section, interchange suggestion information for suggesting interchange of said network devices;
wherein said interchange suggestion information generating section generates, based on the utilization degree obtained by said utilization degree obtaining section, the interchange suggestion information suggesting that a network device having a utilization degree higher than a first reference value among said network devices and a network device having a utilization degree lower than a second reference value among said network devices should be interchanged.

3. The device management system according to claim 1 or 2, wherein:
said interchange suggestion information generating section calculates the average value and the standarddeviation of the utilization degree of said plurality of network devices based on the utilization degree obtained by said utilization degree obtaining section and generates interchange suggestion information suggesting that a network device having a utilization degree higher than a first threshold and a network device having a utilization degree lower than a second threshold should be interchanged, said first threshold being a value obtained by adding said average value and said standard deviation and said second threshold being a value obtained by subtracting said standard deviation from said average value.

4. A device management system communicably connecting a plurality of network devices andmanaging saidnetwork devices, comprising:
operating degree obtaining section for obtaining an operating degree of each of said network devices, said operating degree indicating a degree of operation of said network device; and
interchange suggestion information generating section for generating interchange suggestion information for suggesting interchange of said network devices based on said operating degrees obtained by said operating degree obtaining section;
wherein said interchange suggestion information generating section generates, based on the operating degrees obtained by said operating degree obtaining section, the interchange suggestion information suggesting that a network device having a higher operating degree among said network devices and a network device having a lower operating degree among said network devices should be interchanged.

5. A device management system communicably connecting a plurality of network devices and managing saidnetworkdevices, comprising:
operating degree obtaining section for obtaining an operating degree of each of said network devices, said operating degree indicating a degree of operation of said network device; and
interchange suggestion information generating section for generating interchange suggestion information for suggesting interchange of said network devices based on said operating degrees obtained by said operating degree obtaining section;
wherein said interchange suggestion information generating section generates, based on the operating degrees obtained by said operating degree obtaining section, the interchange suggestion information suggesting that a network device having an operating degree higher than a first reference value among said network devices and a network device having an operating degree lower than a second reference value among said network devices should be interchanged.

6. The device management system according to claim 4 or 5, wherein:
said interchange suggestion information generating section calculates, based on the operating degrees obtained by said operating degree obtaining section, the average value and the standard deviation of the operating degrees of said plurality of network devices and generates interchange suggestioninformationsuggestingthat a network device having an operating degree higher than a first threshold and a network device having an operating degree lower than a second threshold should be interchanged, said first threshold being a value obtained by adding said average value and said standard deviation and said second threshold being a value obtained by subtracting said standard deviation from said average value.

7. The device management system according to claim 6, wherein:
said interchange suggestion information generating section generates interchange suggestion information suggesting that a network device having the nth highest operating degree counting from the highest among the network devices having operating degrees higher than said first threshold and a network device having the nth lowest operating degree counting from the lowest among the network devices having operating degrees lower than said second threshold should be interchanged.

8. The device management system according to claim 4 or 5, wherein:
said operating degree is a consumption of a consumable used in each of said network devices; and
said interchange suggestion information generating section calculates, based on the operating degrees obtained by said operating degree obtaining section, the average value and the standard deviation of consumed quantities consumed in saidplurality of network devices in a specified time period and generates interchange suggestion information suggesting that a network device having a consumption greater than a first threshold and a network device having a consumption less than a second threshold shouldbe interchanged, said first threshold being a value obtained by adding said average value and said standard deviation and said second threshold being a value obtained by subtracting said standard deviation from said average value.

9. The device management system according to any of claims 4 to 8, further comprising a installation location information storage section for storing installation location information of each of the network devices, said installation location information indicating the installation location, wherein said interchange suggestion information generating section reads the installation location information of network devices to be interchanged from said installation location information storage section and generates said interchange suggestion information based on said read installation location information.

10. The device management system according to claim 9, wherein said installation location information is map information including at least the installation locations of said network devices.

11. A printer management system communicably connecting a plurality of network printers with a printer management terminal managing said network printer,
said network printer each comprising utilization quantity detecting section for detecting the utilization quantity of a consumable used in the network printer and utilization quantity information sending section for sending the utilization quantity information detected by said utilization quantity detecting section to said printer management terminal;
said printer management terminal comprising utilization quantity information receiving section for receiving said utilization quantity information, interchange suggestion information generating section for generating interchange suggestion information for suggesting interchange of said network printers based on said utilization quantity information receivedby said utilization quantity information receiving section, and interchange suggestion information presenting section for presenting the interchange suggestion information generated by said interchange suggestion information generating section;
wherein said interchange suggestion information generating section generates, based on the utilization quantity information received by said utilization quantity information receiving section, interchange suggestion information suggesting that a network printer having a higher utilization quantity and a network printer having a lower utilization quantity should be interchanged.

12. A printer management system communicably connecting a plurality of network printers with a printer management terminal managing said network printer,
said network printer each comprising utilization quantity detecting section for detecting the utilization quantity of a consumable used in the network printer and utilization quantity information sending section for sending the utilization quantity information detected by said utilization quantity detecting section to said printer management terminal;
said printer management terminal comprising utilization quantity information receiving section for receiving said utilization quantity information, interchange suggestion information generating section for generating interchange suggestion information for suggesting interchange of said network printers based on said utilization quantity information received by said utilization quantity information receiving section, and interchange suggestion information presenting section for presenting the interchange suggestion information generated by said interchange suggestion information generating section;
wherein said interchange suggestion information generating section generates, based on the utilization quantity information received by said utilization quantity information receiving section, interchange suggestion information suggesting that a network printer having a utilization quantity higher than a first reference value among said network printers and a network printer having a utilization quantity lower than a second reference value among said network printers should be interchanged.

13. The printer management system according to claim 11 or 12, wherein:
said interchange suggestion information generating section calculates the average value and the standard deviation of the utilization quantity of said plurality of network printers based on the utilization quantity information received by said utilization quantity information receiving section and generates interchange suggestion information suggesting that a network printer having a utilization quantity higher than a first threshold and a network printer having a utilization quantity lower than a second threshold should be interchanged, said first threshold being a value obtained by adding said average value and said standard deviation and said second threshold being a value obtained by subtracting said standard deviation from said average value.

14. The printer management system according to claim 13, wherein:
said interchange suggestion information generating section generates interchange suggestion information suggesting that a network printer having the nth highest utilization quantity counting from the highest among the network printers having utilization quantity higher than said first threshold and a network printer having the nth lowest utilization quantity counting from the lowest among the network printers having utilization quantity lower than said second threshold should be interchanged.

15. The printer management system according to claim 11 or 12, wherein:
said utilization quantity is the number of sheets used in printing on each of said network printers, and
said interchange suggestion information generating section calculates, based on the utilization quantity information received bysaid utilization quantity information receiving section, the average value and the standard deviation of the numbers of sheets printed on the plurality of network printers in a specified time period and generates interchange suggestion information suggesting that a network printer having the number of printed sheets that is greater than a first threshold and a network printer having the number of printed sheets that is smaller than a second threshold should be interchanged, said first threshold being a value obtained by adding said average value and said standard deviation and said second threshold being a value obtained by subtracting said standard deviation from said average value.

16. The printer management system according to claim 13 or 14, wherein saidutilization quantity is the remaining quantity of toner or ink used in printing on each of said network printers.

17. The printer management system according to any of claims 11 to 16, wherein:
said printer management terminal comprises installation location information storage section for storing installation location information of each of said network printers, said installation location information indicating the installation location; and
said interchange suggestion information generating sectionreadstheinstallationlocationinformationofnetwork printers to be interchanged from said installation location information storage section and generates said interchange suggestion information based on said read installation location information.

18. The printer management system according to claim 17, wherein said installation location information is map information including at least the installation locations of said network printers.

19. A printer management terminal communicably connected to a plurality of network printers, comprising:
utilization quantity information receiving section for receiving utilization quantity information indicating the utilization quantity of a consumable used in each of said network printers, interchange suggestion information generating section for generating interchange suggestion information for suggesting interchange of said network printers based on the utilization quantity information received by said utilization quantity information receiving section, and interchange suggestion information presenting section for presenting the interchange suggestion information generated by said interchange suggestion information generating section;
wherein said interchange suggestion information generating section generates, based on said utilization quantity information received by said utilization quantity information receiving section, interchange suggestion information suggesting that a network printer having a higher utilization quantity and a network printer having a lower utilization quantity should be interchanged.

20. A printer management terminal communicably connected to a plurality of network printers, comprising:
utilization quantity information receiving section for receiving utilization quantity information indicating the utilization quantity of a consumable used in each of said network printers, interchange suggestion information generating section for generating interchange suggestion information for suggesting interchange of said network printers based on the utilization quantity information received by said utilization quantity information receiving section, and interchange suggestion information presenting section for presenting the interchange suggestion information generated by said interchange suggestion information generating section;
wherein said interchange suggestion information generating section generates, based on said utilization quantity information received by said utilization quantity information receiving section, interchange suggestion information suggesting that a network printer having a utilization quantity higher than a first reference value among said network printers and a network printer having a utilization quantity lower than a second reference value among said network printers should be interchanged.

21. A program for terminal to be executed by a computer communicably connecting a network printer, said program causing said computer to perform a process implemented as: utilization quantity information receiving section for receiving utilization quantity information indicating the utilization quantity of a consumable used in said network printer; interchange suggestion information generating section for generating interchange suggestion information for suggesting interchange of said network printers based on the utilization quantity information received bysaid utilization quantity information receiving section; and interchange suggestion information presenting section for presenting the interchange suggestion information generated by said interchange suggestion information generating section;
wherein said interchange suggestion information generating section generates, based on the utilization quantity information received by said utilization quantity information receiving section, the interchange suggestion information suggesting that a network printer having a higher utilization quantity and a network printer having a lower utilization quantity should be interchanged.

22. A program for terminal to be executed by a computer communicably connecting a network printer, said program causing said computer to perform a process implemented as: utilization quantity information receiving section for receiving utilization quantity information indicating the utilization quantity of a consumable used in said network printer; interchange suggestion information generating section for generating interchange suggestion information for suggesting interchange of said network printers based on the utilization quantityinformationreceived bysaid utilization quantity information receiving section; and interchange suggestion information presenting section for presenting the interchange suggestion information generated by said interchange suggestion information generating section;
wherein said interchange suggestion information generating section generates, based on the utilization quantity information received by said utilization quantity information receiving section, the interchange suggestion information suggesting that a network printer having a utilization quantity higher than a first reference value among said network printers and a network printer having a utilization quantity lower than a second reference value among said network printers should be interchanged.

23. A device management method for communicably connecting a plurality of network devices and managing said network devices, comprising the steps of:
obtaining a utilization degree of each of said network devices, said utilization degree indicating a degree of utilization of the consumable consumed by operation of said network device; and
generating, based on the utilization degree obtained at said utilization degree obtaining step, interchange suggestion information for suggesting interchange of said network devices;
wherein said interchange suggestion information generating step generates, based on the utilization degree obtained at said utilization degree obtaining step, the interchange suggestion information suggesting that a network device having a higher utilization degree among said network devices and a network device having a lower utilization degree among said network devices should be interchanged.

24. A device management method for communicably connecting a plurality of network devices and managing said network devices, comprising the steps of:
obtaining the utilization degree of a consumable consumed by operation of each of said network devices; and
generating, based on the utilization degree obtained at said utilization degree obtaining step, interchange suggestion information for suggesting interchange of said network devices;
wherein said interchange suggestion information generating step generates, based on the utilization degree obtained at said utilization degree obtaining step, the interchange suggestion information suggesting that a network device having a utilization degree higher than a first reference value among said network devices and a network device having a utilization degree lower than a second reference value among said network devices should be interchanged.

25. A device management method for communicably connecting a plurality of network devices and managing said network devices, comprising the steps of:
obtaining an operating degree of each of said network devices, said operating degree indicating a degree of operation of said network device; and
generating interchange suggestion information for suggesting interchange of said network devices based on said operating degrees obtained at said operating degree obtaining step;
wherein said interchange suggestion information generating step generates, based on the operating degrees obtained at said operating degree obtaining step, the interchange suggestion information suggesting that a network device having a higher operating degree among said network devices and a network device having a lower operating degree among said network devices should be interchanged.

26. A device management method for communicably connecting a plurality of network devices and managing said network devices, comprising the steps of:
obtaining an operating degree of each of said network devices, said operating degree indicating a degree of operation of said network device; and
generating interchange suggestion information for suggesting interchange of said network devices based on said operating degrees obtained at said operating degree obtaining step;
wherein said interchange suggestion information generating step generates, based on the operating degrees obtained at said operating degree obtaining step, the interchange suggestion information suggesting that a network device having an operating degree higher than a first reference value among said network devices and a network device having an operating degree lower than a second reference value among said network devices should be interchanged.
